# EUROPÄISCHE PATENTSCHRIFT

(11) **EP 4 256 247 B1**
(45) Veröffentlichungstag und Bekanntmachung des Hinweises auf die Patenterteilung: **20.11.2024**
(21) Anmeldenummer: 21782645.2
(22) Anmeldetag: 10.09.2021
(51) Int. Cl.: F24S 20/20, F24S 80/20, F24S 80/30

(54) **SOLARSTRAHLUNGSEMPFÄNGERVORRICHTUNG ZUM AUFHEIZEN EINES WÄRMETRÄGERMEDIUMS IN EINEM SOLARTHERMISCHEN KRAFTWERK**
SOLAR RADIATION RECEIVER APPARATUS FOR HEATING A HEAT TRANSFER MEDIUM IN A SOLAR THERMAL POWER PLANT
APPAREIL RÉCEPTEUR DE RAYONNEMENT SOLAIRE POUR CHAUFFER UN MILIEU DE TRANSFERT DE CHALEUR DANS UNE CENTRALE HÉLIOTHERMIQUE

(30) Priorität: 07.12.2020 DE 102020132496; 07.12.2020 DE 102020132497; 07.12.2020 DE 102020132498
(43) Veröffentlichungstag der Anmeldung: 11.10.2023
(73) Patentinhaber: Deutsches Zentrum für Luft- und Raumfahrt e.V., 53227 Bonn (DE)
(72) Erfinder: RHEINLÄNDER, Jens, 37308 Mengelrode (DE); BUCK, Reiner, 70563 Stuttgart (DE); LUBKOLL, Matti, 73207 Plochingen (DE); AMSBECK, Lars, 67000 Strasbourg (FR); REICHART, Markus Alois, 70374 Stuttgart (DE); EBERT, Miriam, 70195 Stuttgart (DE); TREBING, David, 70199 Stuttgart (DE)
(74) Vertreter: RPK Patentanwälte Reinhardt und Kaufmann Partnerschaft mbB
(86) Internationale Anmeldenummer: PCT/EP2021/075011
(87) Internationale Veröffentlichungsnummer: WO 2022/122202

(56) Entgegenhaltungen:
- EP-A1- 0 509 286
- DE-A1- 102010 062 367
- DE-C- 707 174
- US-A- 4 420 302
- US-A- 5 947 114

## Beschreibung

### Stand der Technik

Die Erfindung betrifft eine Solarstrahlungsempfängervorrichtung zum Aufheizen eines Wärmeträgermediums in einem solarthermischen Kraftwerk.

Solarstrahlungsempfängervorrichtungen nach dem Stand der Technik sind bekannt als solare Partikelempfänger für Solarturmkraftwerke. Solche Empfänger verwenden einen rotierenden hohlzylinderförmigen Behälter, in der sich an der Innenwand des rotierenden Zylinders ein geschlossener Film keramischer Partikel mit einem Durchmesser von typischerweise 1 mm als Wärmeträgermedium ausbildet. Dieser Partikelfilm wird mittels konzentrierter Solarstrahlung auf über 900°C erhitzt und anschließend aus dem Zylinder abgeführt. Die in den Partikeln gespeicherte Energie kann in einem isolierten Behälter zwischengespeichert werden und zur Stromerzeugung und/oder in Prozessanwendungen verwendet werden.

Der Empfänger besteht üblicherweise aus drei Bereichen. Ein Partikelverteiler wird als Zuführtrichter zu dem rotierenden Zylinder ausgeführt. Der Trichter besteht aus einem Konus mit aufgeschweißten Leitblechen, durch welche die Partikel auf die Innenwand des rotierenden Zylinders hin beschleunigt und verteilt werden.

Die Partikellauffläche auf der Innenwand des Hohlzylinders kann mit einem aufgeschweißten Gitter versehen sein. Das Gitter dient zur Erhöhung der Reibung zwischen Partikeln und Zylinderinnenwand. In einem stationären, nicht mitrotierenden Sammelring als Abfuhreinrichtung werden die Partikel am Ende des rotierenden Zylinders wieder aufgefangen und kontrolliert abgeführt. Der Sammelring wird gegenüber dem rotierenden Zylinder mittels einer metallischen axialen Labyrinth-Dichtung gegen Partikelverlust abgedichtet.

Die DE 102014106320 A1 beschreibt eine Vorrichtung mit einem Solarstrahlungsempfänger, welche einen Behälter umfasst, der eine Außenwand und einen von der Außenwand umgebenen Innenraum umfasst. Die Vorrichtung umfasst eine Zufuhrvorrichtung zur Zuführung eines Wärmeträgermediums zu dem Innenraum des Behälters. Der Behälter ist mittels einer Drehantriebsvorrichtung der Solarstrahlungsempfängervorrichtung derart um eine Drehachse drehbar, dass das Wärmeträgermedium unter Ausbildung eines Wärmeträgermedium-Films an einer Innenwand des Behälters entlanggeführt wird. Dabei umfasst die Vorrichtung mindestens ein Überlaufelement zur Ausbildung einer rotationssymmetrischen inneren Oberfläche des Wärmeträgermedium-Films.

Aus der DE102010062367 A1 ist eine Vorrichtung mit einem Solarstrahlungsempfänger bekannt, bei der partikelförmiges Wärmeträgermedium in dem Behälter durch Sonnenstrahlung erhitzt wird und die Partikel aus dem Behälter abgeführt werden.

### Offenbarung der Erfindung

Die Aufgabe der Erfindung ist es, eine kostengünstige Solarstrahlungsempfängervorrichtung mit erhöhtem Wirkungsgrad zu schaffen.

Die Aufgabe wird durch die Merkmale des unabhängigen Anspruchs gelöst. Günstige Ausgestaltungen und Vorteile der Erfindung ergeben sich aus den weiteren Ansprüchen, der Beschreibung und der Zeichnung.

Es wird eine Solarstrahlungsempfängervorrichtung zum Aufheizen eines Wärmeträgermediums in einem solarthermischen Kraftwerk vorgeschlagen, umfassend einen Behälter mit zwei sich gegenüberliegenden Enden, welcher eine Außenwand und einen von der Außenwand umgebenen Innenraum umfasst; eine Zufuhreinrichtung zum Zuführen des Wärmeträgermediums zu dem Innenraum des Behälters, wobei die Zufuhreinrichtung an einem der Enden des Behälters angeordnet ist; eine Abfuhreinrichtung zum Ableiten des Wärmeträgermediums aus dem Behälter, wobei die Abfuhreinrichtung am gleichen oder gegenüberliegenden Ende des Behälters angeordnet ist; sowie eine Aperturöffnung für den Eintritt von Sonnenstrahlung an einem der Enden. Der Behälter weist eine Längsachse auf, welche parallel oder in einem spitzen Winkel kleiner 90° zur Schwerkraftrichtung orientiert ist. Dabei ist der Behälter in einer bestimmungsgemäßen Drehrichtung mittels einer Drehantriebsvorrichtung der Solarstrahlungsempfängervorrichtung derart um eine Drehachse drehbar, dass das Wärmeträgermedium unter Ausbildung eines Wärmeträgermedium-Films an einer Innenwand des Behälters entlangführbar ist. Die Innenwand des Behälters weist eine reibungsfördernde Einrichtung auf. Die Zufuhreinrichtung weist eine Vorderwand mit einer Zuführungsöffnung und eine zum Innenraum des Behälters gerichtete Rückwand auf.

Erfindungsgemäß ist zwischen Vorderwand und Rückwand wenigstens ein sich wenigstens in radialer Richtung erstreckendes Leitelement angeordnet, das entlang seiner Erstreckung zwischen Zuführungsöffnung und Außenwand in einer Richtung entgegen der bestimmungsgemäßen Drehrichtung gekrümmt ausgebildet ist.

Unter der Krümmung einer Kurve wird dabei die Richtungsänderung beim Durchlaufen der Kurve verstanden. Das Leitelement weist demzufolge beim Durchlaufen in radialer Richtung von radial innen nach radial außen eine Richtungsänderung auf, welche der Drehrichtung entgegensteht.

Durch die Ausbildung von gekrümmten Leitelementen zwischen Vorderwand und Rückwand der Zufuhreinrichtung kann vorteilhaft eine homogenere Verteilung des Wärmeträgermediums, welches insbesondere als Partikelstrom ausgebildet sein kann, zu Beginn der Lauffläche des Wärmeträgermediums auf dem Innenmantel des Behälters erreicht werden. Je homogener der Partikelfilm über die komplette Höhe des Innenmantels ist, desto effizienter und gleichmäßiger werden die Partikel durch die solare Einstrahlung erhitzt.

Vorteilhaft können die gekrümmten Leitelemente so ausgebildet sein, dass die Aufenthaltsdauer der Partikel im Bereich der Rückwand erhöht wird und die Kontaktfläche mit den Partikeln vergrößert wird, um eine möglichst hohe Wärmeaufnahme der Partikel, bzw. Kühlwirkung der Rückwand zu erreichen.

Vorteilhaft kann das Wärmeträgermedium auf diese Weise gleichmäßig und mit möglichst niedriger radialer Geschwindigkeitskomponente in den Innenraum des Behälters eintreten.

Durch die gekrümmten Leitelemente kann die Relativgeschwindigkeit der einzelnen Partikel des Wärmeträgermediums in Bezug auf die führenden Komponenten wie beispielsweise die Leitelemente minimiert werden, um so den Abrieb der Partikel aneinander und an den Teilen der Solarstrahlungsempfängervorrichtung zu reduzieren.

Vorteilhaft kann bei hohen Massenströmen des Wärmeträgermediums eine Überlaufmöglichkeit an dem Behälter, beispielsweise ein Bypass der Leitelemente, vorgesehen sein, damit eine Einschränkung des maximalen Massenstroms vermieden werden kann.

Nach einer günstigen Ausgestaltung der Solarstrahlungsempfängervorrichtung kann das Wärmeträgermedium fließfähig oder rieselfähig sein. Insbesondere kann das Wärmeträgermedium durch Partikel gebildet sein.

Insbesondere kann vorgesehen sein, dass das Wärmeträgermedium Partikel oder Teilchen aus gesintertem Bauxit umfasst oder aus Partikeln oder Teilchen aus gesintertem Bauxit gebildet ist. Die Partikel oder Teilchen können vorzugsweise einen durchschnittlichen Teilchendurchmesser von ungefähr 250 µm bis ungefähr 1,8 mm aufweisen. Jedoch können auch pulverförmige Medien mit sehr viel kleineren Korngrößen, wie beispielsweise Zementmehl, eingesetzt werden. Vorzugsweise ergibt sich bei dem Wärmeträgermedium bis mindestens ungefähr 800°C, insbesondere bis mindestens ungefähr 1.000°C, keine Agglomeration von Partikeln oder Teilchen. Die Partikel weisen vorzugsweise eine hohe Sphärizität auf. Die Sphärizität, also das Verhältnis der Oberfläche einer Kugel gleichen Volumens zur Oberfläche des Partikels kann dabei insbesondere größer als ungefähr 0,8, insbesondere größer als ungefähr 0,9 sein. Vorzugsweise können die Partikel oder Teilchen thermoschockbeständig sein.

Nach einer günstigen Ausgestaltung der Solarstrahlungsempfängervorrichtung kann die Drehachse parallel oder in einem spitzen Winkel kleiner 90°, vorzugsweise kleiner oder gleich 80°, zur Schwerkraftrichtung g liegen. Insbesondere kann die Drehachse koaxial zur Längsachse des Behälters sein.

Dabei kann sich ein Wärmeträgermedium-Film auf der Innenwand des rotierenden Behälters besonders günstig ausbilden, sodass ein möglichst gleichmäßiger Wärmeübertrag auf das Wärmeträgermedium erreicht werden kann.

Nach einer günstigen Ausgestaltung der Solarstrahlungsempfängervorrichtung kann das wenigstens eine Leitelement auf der Rückwand angeordnet sein. Insbesondere kann eine Höhe des wenigstens einen Leitelements wenigstens teilweise und/oder abschnittsweise einem Abstand zwischen Vorderwand und Rückwand entsprechen.

Durch gekrümmte Leitelemente kann die Aufenthaltsdauer des Wärmeträgermediums im Bereich der Rückwand erhöht werden. Da die zugeführten Partikel des Wärmeträgermediums eine niedrige Temperatur aufweisen, kann die Rückwand, welche auch die der Aperturöffnung gegenüberliegende Rückseite des Behälters darstellt und demzufolge sich durch die solare Einstrahlung sowie das aufgeheizte Wärmeträgermedium im Behälter aufheizen kann, wirksam gekühlt werden. Vorteilhaft können die gekrümmten Leitelemente so ausgebildet sein, dass die Aufenthaltsdauer der Partikel im Bereich der Rückwand erhöht wird und die Kontaktfläche mit den Partikeln vergrößert wird, um eine möglichst hohe Wärmeaufnahme der Partikel, bzw. Kühlwirkung der Rückwand zu erreichen. Die Leitelemente können eine begrenzte Höhe aufweisen. In diesem Fall kann das Wärmeträgermedium bei hohen Massenströmen über die Leitelemente schneller nach außen fließen.

Nach einer günstigen Ausgestaltung der Solarstrahlungsempfängervorrichtung kann das wenigstens eine Leitelement sich spiralförmig von der Zuführungsöffnung in radialer Richtung nach außen verlaufend erstrecken.

Durch das wenigstens eine gekrümmte Leitelement kann die Geschwindigkeit des Wärmeträgermediums in radialer Richtung reduziert werden und die Aufenthaltsdauer im Bereich des Leitelements erhöht werden. Während dieser Zeit kann das Wärmeträgermedium über die Rückwand und das Leitelement Wärme aufnehmen und damit gleichzeitig die Rückwand kühlen.

Nach einer günstigen Ausgestaltung der Solarstrahlungsempfängervorrichtung kann an einem Außenrand der Rückwand eine Verteilungseinrichtung angeordnet sein, welche zur Vergleichmäßigung einer räumlichen Verteilung des Wärmeträgermediums ausgebildet ist. Durch die Verteilungseinrichtung kann eine gleichmäßige Verteilung des Wärmeträgermediums auf die Innenwand des Behälters, insbesondere bei Partikeln als Wärmeträgermedium, erreicht werden, um so einen günstigen Wärmeübertrag auf das Wärmeträgermedium zu erreichen.

Nach einer günstigen Ausgestaltung der Solarstrahlungsempfängervorrichtung kann ein Durchmesser der Rückwand der Zufuhreinrichtung kleiner als ein Innendurchmesser des Behälters sein. Insbesondere kann der Durchmesser der Rückwand höchstens 95%, bevorzugt höchstens 60%, des Innendurchmessers des Behälters betragen. Ein günstiger Wert für den Durchmesser der Rückwand hängt jedoch von den tatsächlichen Auslegungsbedingungen der Solarstrahlungsempfängervorrichtung ab und kann entsprechend angepasst werden.

Ein als Rückwand ausgebildeter innerer Konus der Zufuhreinrichtung kann so etwas kürzer als im Stand der Technik üblich ausgeführt sein.

In Abhängigkeit des Konuswinkels und der Mindestdrehzahl des Behälters kann die radiale Position der Partikel des Wärmeträgermediums bestimmt werden, ab welcher diese nicht mehr über die Rückwand gleiten, sondern durch die Zentrifugalkraft an den äußeren Konus, d.h. die Innenseite der Vorderwand der Zufuhreinrichtung gedrückt werden, von wo sie in den Innenraum des Behälters geleitet werden. Ein Teil des inneren Konus kann dadurch im Bereich zwischen einem entsprechenden Abhebepunkt der Partikel und Behälterwand weggelassen werden, um so eine frühere solare Bestrahlung der Partikel bereits in der Zuführung zu ermöglichen. Hierdurch können Fertigungskosten der Zufuhreinrichtung gesenkt werden. Weiterhin kann die Erwärmung der Partikel verbessert werden. Folglich können kürzer gebaute Behälter eingesetzt werden.

Nach einer günstigen Ausgestaltung der Solarstrahlungsempfängervorrichtung können die Vorderwand und die Rückwand der Zufuhreinrichtung konusförmig ausgebildet sein. Insbesondere kann ein Konuswinkel zwischen 30° und 90°, bevorzugt zwischen 45° und 80° liegen. Weiter kann insbesondere die Zuführungsöffnung in einer Spitze des Konus angeordnet sein. Durch die Ausbildung der Zufuhreinrichtung als doppelter Konus kann eine günstige Zuführung des Wärmeträgermediums aufgrund einer vorteilhaften Strömungsführung erreicht werden, sodass sich das Wärmeträgermedium günstig an die Innenwand des Behälters anlegen kann.

Nach einer günstigen Ausgestaltung der Solarstrahlungsempfängervorrichtung kann wenigstens die Rückwand der Zufuhreinrichtung als ebene Fläche ausgebildet sein, welche schräg, bevorzugt senkrecht, zur Längsachse ausgerichtet ist. Dabei kann in der Längsachse ein mit einer Kegelspitze zur Zuführungsöffnung gerichteter Kegel zur Verteilung des Wärmeträgermediums angeordnet sein.

Der konusförmige Aufbau der Zufuhreinrichtung mit üblicherweise bis zu 45° Konuswinkel kann vorteilhaft vereinfacht werden als flacher Trichter ohne Neigungswinkel. Es können zur Beschleunigung der Partikel des Wärmeträgermediums in radialer Richtung nach außen weiterhin Leitelemente wie beispielsweise auf der Rückwand angeschweißte Führungsbleche angeordnet sein. Diese können beispielsweise vorgebogen eingesetzt werden und nur an den Enden in radialer Richtung angeschweißt sein. Durch die Vorbiegung ist die Beulrichtung bei thermischer Längenausdehnung der Leitelemente vorgegeben. Die Vorbiegung weist weiterhin den Vorteil auf, dass damit der Abgabepunkt der Partikel an die Innenwand des Behälters begünstigend verschoben werden kann. Im Mittelpunkt des flachen Trichters kann ein Kegel eingeschweißt sein, der die zugeführten Partikel aus einem stationären Rohr als Zufuhröffnung in radiale Richtung schonend umlenkt. Die Partikel können beispielsweise im oberen Viertel des Kegels zugeführt werden, sodass diese möglichst am unteren Umfang an die Innenwand des Behälters abgegeben werden können. Durch diese Ausführung können die Komponenten kostengünstiger und platzsparender ausgeführt werden.

Nach einer günstigen Ausgestaltung der Solarstrahlungsempfängervorrichtung kann die Innenwand des Behälters verteilt angeordnete Leitstrukturen, insbesondere schaufelartige Leitstrukturen aufweisen, welche zum Fördern des Wärmeträgermediums bei rotierendem Behälter in Richtung des zufuhrseitigen oder abfuhrseitigen Endes ausgebildet sind.

Die Partikelbewegung des Wärmeträgermediums im Behälter erfolgt im Wesentlichen durch die Schwerkraft. Der Behälter ist üblicherweise mit der Aperturöffnung nach unten geneigt. Die höchsten Temperaturen treten typischerweise nahe der Aperturöffnung auf.

Durch Umkehr der Partikelströmungsrichtung kann das Temperaturprofil im Innenraum des Behälters so verändert werden, dass die höchsten Temperaturen nahe der Rückwand tief im Inneren des Behälters auftreten. Dadurch können die thermischen Verluste durch thermische Strahlung und Konvektion vorteilhaft reduziert werden.

So können eine Vielzahl von schaufelartigen Leitstrukturen verwendet werden, die fest im Behälter so verbaut sind, dass jeweils eine Oberschicht der zugeführten Partikel abgehoben und um etwa einen Schaufelabstand in axialer Richtung schräg zum ersten Ende versetzt wieder abgelegt wird.

Nach einer günstigen Ausgestaltung der Solarstrahlungsempfängervorrichtung kann im Innenraum des Behälters wenigstens eine parallel oder leicht geneigt, insbesondere kleiner 10°, bevorzugt kleiner 5° geneigt zur Längsachse und benachbart zur Innenwand verlaufende Fördervorrichtung, insbesondere ein Rohr, angeordnet sein, welche über seine Länge verteilt angeordnete Leitstrukturen, insbesondere schaufelartige Leitstrukturen, aufweist, welche zum Fördern des Wärmeträgermediums bei rotierendem Behälter in Richtung des ersten Endes oder des zweiten Endes ausgebildet sind. Dabei kann die Fördervorrichtung mit einer außerhalb des Behälters angeordneten Aufnahmeeinrichtung fest verbunden sein.

Die Partikelzufuhr kann prinzipiell auch durch die Aperturöffnung erfolgen oder alternativ über eine als Rohr ausgebildete Fördervorrichtung von dem entgegengesetzten Ende zu der Aperturöffnung. Üblicherweise erfolgt die Partikelzufuhr in den Behälter jedoch von dem der Aperturöffnung abgewandten Ende des Behälters. Schaufelartige Leitstrukturen können dazu vorteilhaft an dem Rohr angeordnet sein.

Nach einer günstigen Ausgestaltung der Solarstrahlungsempfängervorrichtung kann die Fördervorrichtung zum Weiterleiten des am ersten Ende des Behälters über die Zufuhreinrichtung zugeführten Wärmeträgermediums zum zweiten Ende ausgebildet sein. Der Transport des Wärmeleitmediums kann vorteilhaft über die schaufelartigen Leitstrukturen erfolgen. Dadurch können die Partikel mit niedriger Temperatur dem abfuhrseitigen zweiten Ende des Behälters zugeführt werden. Damit kann gleichzeitig eine Kühlung des Rohrs erfolgen.

Nach einer günstigen Ausgestaltung der Solarstrahlungsempfängervorrichtung kann die Fördervorrichtung zum Weiterleiten des aufgeheizten Wärmeträgermediums vom zweiten Ende zum ersten Ende ausgebildet sein. Alternativ können auch die aufgeheizten Partikel des Wärmeträgermediums dem der Aperturöffnung abgewandten Ende des Behälters zugeführt werden.

Nach einer günstigen Ausgestaltung der Solarstrahlungsempfängervorrichtung kann die Fördervorrichtung in bestimmungsgemäßem Gebrauchszustand bezüglich einer Schwerkraftrichtung in einem oberen Bereich des Innenraums angeordnet sein.

Vorteilhaft kann durch die Nutzung von ortsfesten schaufelartigen Leitstrukturen eine fest definierte Partikelunterschicht des Wärmeträgermedium-Films erzeugt werden, wobei die sich darüber ablagernden Partikel abgehoben und befördert werden. Dadurch können für die Innenwand des Behälters wesentlich größere Toleranzen zugelassen werden, die durch die stationäre Partikelunterschicht ausgeglichen werden.

Bei einer Anordnung der Fördervorrichtung mit schaufelartigen Leitstrukturen im oberen Bereich des Innenraums wirken Schwerkraft und Zentrifugalkraft auf die Partikel in entgegengesetzter Richtung. Damit ist das Partikelbett des Wärmeträgermediums in diesem Bereich am lockersten und lässt ein Abheben und Befördern vorteilhaft zu. Außerdem trifft in diesem Bereich hauptsächlich die konzentrierte solare Strahlung von Heliostaten auf, die nahe am Turm stehen und damit vergleichsweise kleine Brennflecke erzeugen, die über eine Zielpunktstrategie etwas zur Seite verschoben werden können. Dadurch lässt sich die Belastung auf die Haltevorrichtung reduzieren.

Nach einer günstigen Ausgestaltung der Solarstrahlungsempfängervorrichtung kann die reibungsfördernde Einrichtung an der Innenwand des Behälters mittels eines additiven Fertigungsverfahrens gefertigt und mit der Außenwand verbunden sein. Insbesondere kann die reibungsfördernde Einrichtung an der Innenwand des Behälters gitterförmig ausgebildet sein.

Ein als reibungsfördernde Einrichtung üblicherweise aufgeschweißtes Gitter auf der Innenwand des Behälters kann durch Strukturierung mittels eines additiven Fertigungsverfahrens wie beispielsweise 3D-Druck vorteilhaft ersetzt werden. Die durch 3D-Druck gefertigte Einrichtung kann vor oder nach der Fertigung des Behälters aufgebracht werden. Ein Vorteil des Einsatzes von 3D-Druck besteht beispielsweise darin, dass flexibel jede Art von Strukturierung aufgebracht werden kann. Beispielsweise können für verschiedene Partikeldurchmesser oder zur Beeinflussung der Bewegung in bestimmten Abschnitten des Behälters unterschiedliche Strukturen oder Maschenweiten einer gitterförmigen Struktur an unterschiedlichen Bereichen der Innenwand des Behälters angeordnet werden. Ferner kann die reibungsfördernde Einrichtung als Strukturierung fest mit der Innenwand des Behälters verbunden werden, sodass sie nicht abheben kann.

Durch diese Art einer reibungsfördernden Einrichtung als Strukturierung mittels eines additiven Fertigungsverfahrens kann ein homogener Partikelfilm zuverlässiger aufrechterhalten werden und somit ein zuverlässig hoher Wirkungsgrad der Energieaufnahme der Partikel im Prozess erreicht werden. Weiterhin besteht die Möglichkeit, durch 3D-Druck die Fertigungskosten zu senken, da der Fertigungsprozess automatisiert ablaufen kann.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: in schematischer Darstellung vereinfacht die Funktionsweise eines solarthermischen Kraftwerks;
- Fig. 2: eine Solarstrahlungsempfängervorrichtung nach dem Stand der Technik mit einer Zufuhreinrichtung mit geraden Leitelementen und einem Behälter in einer isometrischen Darstellung;
- Fig. 3: eine Solarstrahlungsempfängervorrichtung nach dem Stand der Technik mit einer Zufuhreinrichtung mit geraden Leitelementen, einem Behälter und einer Abfuhreinrichtung in einer transparenten Darstellung;
- Fig. 4: die Solarstrahlungsempfängervorrichtung nach Figur 3 in einem Längsschnitt;
- Fig. 5: eine Zufuhreinrichtung einer Solarstrahlungsempfängervorrichtung nach dem Stand der Technik in einer Explosionsdarstellung;
- Fig. 6: einen Längsschnitt durch ein Ende eines Behälters mit einer Abfuhreinrichtung nach dem Stand der Technik;
- Fig. 7: eine Draufsicht auf eine Rückwand einer Zufuhreinrichtung mit gekrümmten Leitelementen nach einem Ausführungsbeispiel der Erfindung;
- Fig. 8: eine Draufsicht auf eine Rückwand einer Zufuhreinrichtung mit einem spiralförmig gekrümmten Leitelement nach einem weiteren Ausführungsbeispiel der Erfindung;
- Fig. 9: einen Längsschnitt durch eine Zufuhreinrichtung mit einer verkürzten Rückwand nach einem weiteren Ausführungsbeispiel der Erfindung;
- Fig. 10: eine Draufsicht auf eine Zufuhreinrichtung mit einer flachen Rückwand und gekrümmten Leitelementen nach einem weiteren Ausführungsbeispiel der Erfindung;
- Fig. 11: einen Längsschnitt durch eine Solarstrahlungsempfängervorrichtung mit einer Zufuhreinrichtung mit einer flachen Rückwand und gekrümmten Leitelementen nach Figur 10;
- Fig. 12: einen weiteren Längsschnitt durch einen Behälter mit einer Fördervorrichtung und daran angeordneten schaufelartigen Leitstrukturen nach einem weiteren Ausführungsbeispiel der Erfindung;
- Fig. 13: einen Längsschnitt durch den Behälter nach Figur 12;
- Fig. 14: einen Querschnitt durch den Behälter nach Figur 12;
- Fig. 15: eine Draufsicht auf eine Innenwand eines Behälters mit einer darauf angeordneten reibungsfördernden Einrichtung nach einem weiteren Ausführungsbeispiel der Erfindung;
- Fig. 16: eine vergrößerte Darstellung der reibungsfördernden Einrichtung in der Draufsicht nach Figur 15;
- Fig. 17: einen Querschnitt durch eine Abfuhreinrichtung nach einem weiteren Ausführungsbeispiel der Erfindung mit schaufelartigen Leitelementen;
- Fig. 18: einen Längsschnitt durch die Abfuhreinrichtung nach Figur 17;
- Fig. 19: einen Längsschnitt durch ein Ende eines Behälters mit einer Abfuhreinrichtung nach einem weiteren Ausführungsbeispiel der Erfindung mit einem Rohr zum Ausleiten des Wärmeträgermediums;
- Fig. 20: eine isometrische Darstellung einer Abfuhreinrichtung nach einem weiteren Ausführungsbeispiel der Erfindung mit einem in einen Strahlungsschutz integrierten Abfuhrring;
- Fig. 21: einen Längsschnitt durch eine Abfuhreinrichtung nach einem weiteren Ausführungsbeispiel der Erfindung mit einer Abdeckung als radiale Labyrinth-Dichtung;
- Fig. 22: einen Querschnitt durch eine Abfuhreinrichtung nach einem weiteren Ausführungsbeispiel der Erfindung mit einer radial das Wärmeträgermedium abführenden Sammeleinrichtung;
- Fig. 23: einen vergrößerten Längsschnitt durch die Abfuhreinrichtung nach Figur 22.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

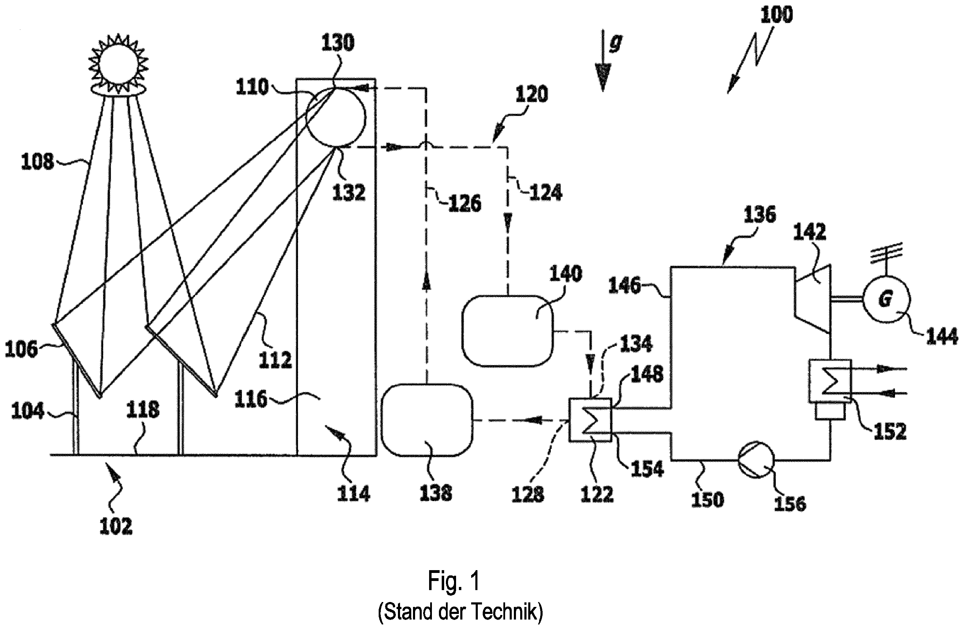

In den Figuren 1 bis 6 wird die Wirkungsweise einer Solarstrahlungsempfängervorrichtung 110 anhand des Standes der Technik erläutert, wie er beispielsweise aus der DE 10 2010 062 367 A1 bekannt ist.

Figur 1 zeigt in schematischer Darstellung die grundsätzliche Funktionsweise eines solarthermischen Kraftwerks 100.

Das solarthermische Kraftwerk 100 umfasst ein Heliostatenfeld 102 mit einer Mehrzahl von Heliostaten 104. Ein Heliostat 104 hat eine Spiegelfläche 106, welche sich um mindestens zwei Achsen ausrichten lässt. Solarstrahlung 108 lässt sich über die Spiegelflächen 106 des Heliostatenfelds 102 insbesondere gebündelt auf eine Solarstrahlungsempfängervorrichtung 110 richten. Auf die Solarstrahlungsempfängervorrichtung 110 gerichtete Solarstrahlung ist in Fig. 1 mit dem Bezugszeichen 112 angedeutet.

Das solarthermische Kraftwerk 100 umfasst mindestens einen Turmreceiver 114, bei welchem die Solarstrahlungsempfängervorrichtung 110 an einem Turm 116 beabstandet zu einem Boden 118 (bezogen auf die Schwerkraftrichtung g) angeordnet ist, das heißt erhöht angeordnet ist. Die Heliostaten 104 sind ebenfalls an dem Boden 118 angeordnet.

Die Solarstrahlungsempfängervorrichtung 110 ist als eine Partikel-Solarstrahlungsempfängervorrichtung ausgebildet, welche mit Partikeln als Wärmeträgermedium betrieben wird. Die Partikel sind beispielsweise Keramikpartikel. Bei einer Ausführungsform werden Bauxit-Partikel mit typischen Durchmessern von ungefähr 250 µm bis ungefähr 1,8 mm eingesetzt. Jedoch ist der Einsatz von größeren oder kleineren Partikeln grundsätzlich auch möglich. Das für den Transport der von dem Heliostatenfeld 102 empfangenen und in die Solarstrahlungsempfängervorrichtung 110 des Turmreceivers 114 eingespeisten Wärme benutzte Wärmeträgermedium 210 ist generell fließfähig oder rieselfähig.

Das solarthermische Kraftwerk 100 umfasst einen ersten Kreislauf 120, welcher ein Partikelkreislauf ist. In diesem ersten Kreislauf 120 werden Partikel durch einen Wärmeübertrager 122 hindurchgeführt. Der erste Kreislauf 120 weist einen Hochtemperaturzweig 124 und einen Niedertemperaturzweig 126 auf. Der Niedertemperaturzweig 126 führt von einem Ausgang 128 des Wärmeübertragers 122 zu einem Eingang 130 der (Partikel-)Solarstrahlungsempfängervorrichtung 110. Der Hochtemperaturzweig 124 führt von einem Ausgang 132 der Solarstrahlungsempfängervorrichtung 110 zu einem Eingang 134 des Wärmeübertragers 122. Partikel lassen sich dadurch über den Niedertemperaturzweig 126 der Solarstrahlungsempfängervorrichtung 110 zuführen und werden dort über Solarstrahlung aufgeheizt. Aufgeheizte Partikel lassen sich über den Hochtemperaturzweig 124 dem Wärmeübertrager 122 zuführen und können dort Wärme an einen zweiten Kreislauf 136 abgeben.

In dem Niedertemperaturzweig 126 ist optional ein Wärmespeicher 138 (Niedertemperatur-Wärmespeicher) angeordnet.

In dem Hochtemperaturzweig 124 ist optional ein Wärmespeicher 140 (Hochtemperatur-Wärmespeicher) angeordnet.

Der zweite Kreislauf 136 ist ein Turbinenkreislauf. In ihm ist eine Turbine 142, insbesondere eine Dampfturbine, angeordnet, welche zur Erzeugung von elektrischer Energie an einen elektrischen Generator 144 gekoppelt ist.

Der zweite Kreislauf 136 umfasst einen Hochtemperaturzweig 146, welcher von einem Ausgang 148 des Wärmeübertragers 122 zu der Turbine 142 führt. Ferner umfasst der zweite Kreislauf 136 einen Niedertemperaturzweig 150, welcher von der Turbine 142 oder einem der Turbine nachgeschalteten Kondensator 152 zu einem Eingang 154 des Wärmeübertragers 122 führt.

In dem Niedertemperaturzweig 150 ist eine Pumpe 156 angeordnet, welche ein Fluid durch den zweiten Kreislauf 136 fördert.

An dem Wärmeübertrager 122 wird das Wasser des zweiten Kreislaufs 136 erhitzt und hierdurch Dampf erzeugt. Dieser Dampf wird über den Hochtemperaturzweig 146 der Turbine 142 zugeführt und darin entspannt. Hierdurch wird die thermische Energie in mechanische Energie gewandelt, welche den elektrischen Generator 144 zur Stromerzeugung antreibt.

Der Dampf wird entspannt und kondensiert schließlich an dem Kondensator 152 zu Wasser. Dieses Kondensat wird in dem Niedertemperaturzweig 150 dem Wärmeübertrager 122 zur erneuten Dampferzeugung zurückgeführt. In dem gezeigten Ausführungsbeispiel ist eine einstufige Turbinenanordnung gezeigt. Es ist auch möglich, dass die Turbinenanordnung mehrstufig ist.

Alternativ oder zusätzlich zur Stromerzeugung ist es beispielsweise auch möglich, dass eine Solarstrahlungsempfängervorrichtung 110 eingesetzt wird, um Prozesswärme zu erzeugen oder chemische Umwandlungen zu bewirken oder Brennstoffe herzustellen. Auch weitere Anwendungen sind denkbar.

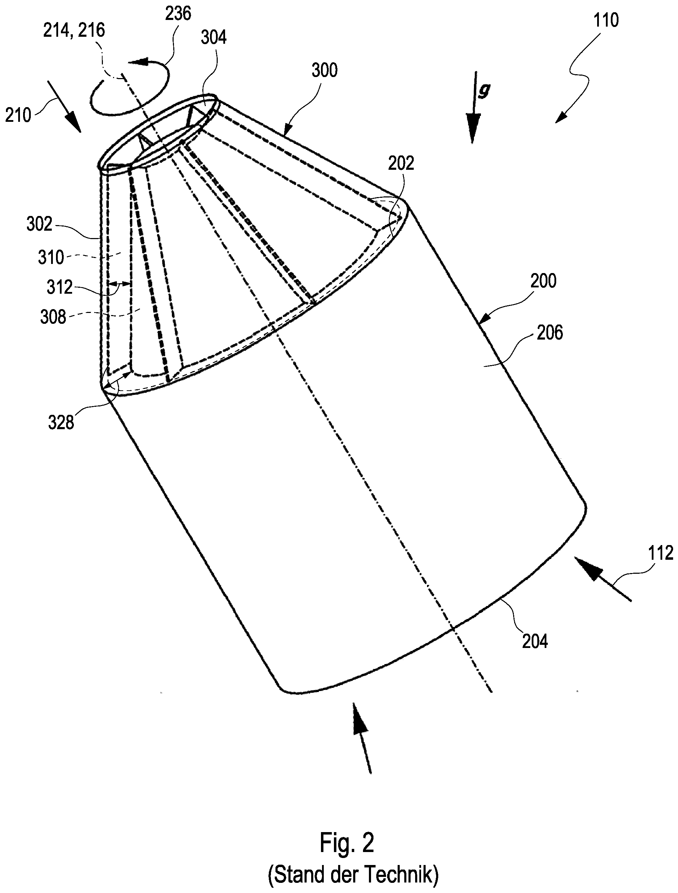

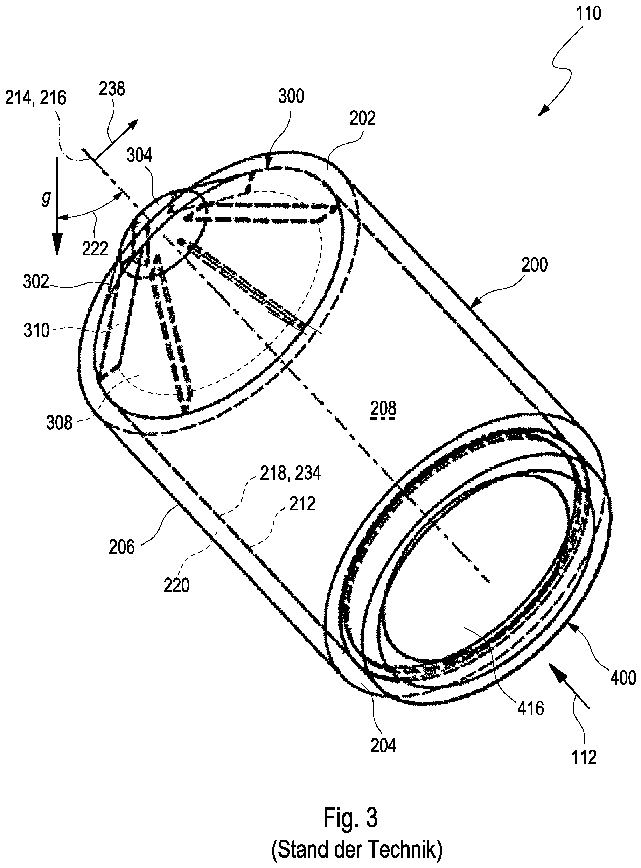

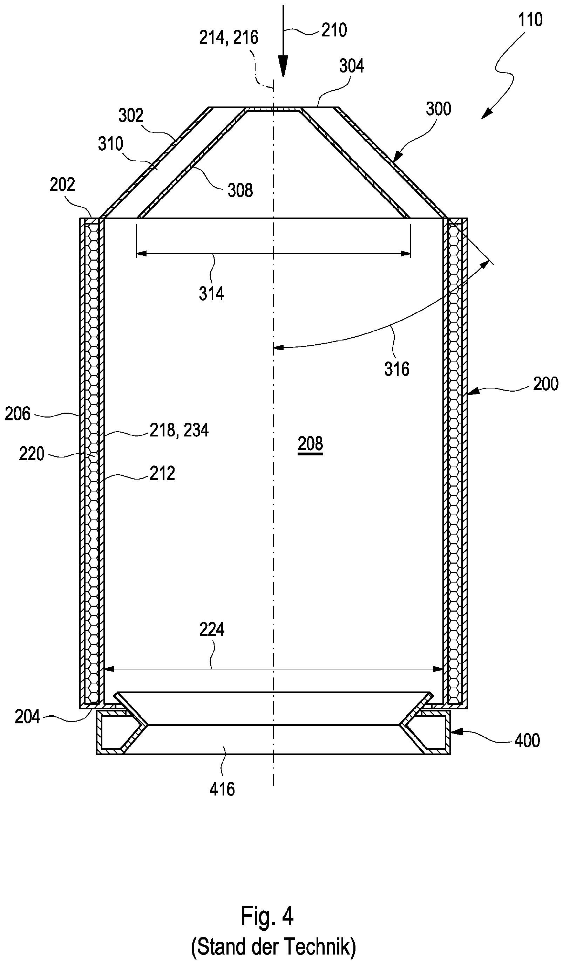

Figur 2 zeigt die Solarstrahlungsempfängervorrichtung 110 nach dem Stand der Technik in einer isometrischen Darstellung, während in Figur 3 eine solche Solarstrahlungsempfängervorrichtung 110 in transparenter Darstellung gezeigt ist. In Figur 4 ist die Solarstrahlungsempfängervorrichtung 110 von Figur 3 in einem Längsschnitt dargestellt.

Die in den Figuren 2 bis 4 dargestellte bekannte Solarstrahlungsempfängervorrichtung 110 umfasst einen Behälter 200, welcher mittels einer nicht dargestellten Drehantriebsvorrichtung um eine Drehachse 216 drehbar ist, sowie eine Zufuhreinrichtung 300 zum Zuführen des Wärmeträgermediums 210 zu einem Innenraum 208 des Behälters 200 und eine Abfuhreinrichtung 400 zum Ableiten des Wärmeträgermediums 210 aus dem Behälter 200, (in den Figuren 3 und 4 erkennbar), welche beide mit diesem Behälter 200 verbunden sind.

Der Behälter 200 weist eine Längsachse 214 auf, welche parallel oder in einem spitzen Winkel von typischerweise kleiner oder gleich 80° zur Schwerkraftrichtung g, die in der Figur durch einen senkrechten Pfeil symbolisiert ist, orientiert ist.

Der Behälter 200 umfasst insbesondere einen hohlzylindrischen Grundkörper, welcher den von einer Außenwand 206 umgebenen kreiszylinderförmigen Innenraum 208 umfasst. Beabstandet zur Außenwand 206 ist eine Innenwand 218 angeordnet, die den Innenraum 208 umgibt. Der Behälter 200 weist zwischen der außen liegenden Außenwand 206 und der Innenwand 218 eine thermische Isolation 220 auf.

Die Drehachse 216 schließt mit der Schwerkraftrichtung g einen Winkel 222 von typischerweise ungefähr 45° ein, wobei die Längsachse 214 zweckmäßigerweise koaxial zu der Drehachse 216 ausgerichtet ist.

Ein bezüglich der Schwerkraftrichtung g unteres Ende 204 des Behälters 200 ist offen ausgebildet, so dass eine Aperturöffnung 416 des Behälters 200 gebildet ist, durch welche Solarstrahlung 112 in den Innenraum 208 des Behälters 200 eintreten kann.

Zur Aufnahme der mittels der Solarstrahlung 112 übertragenen Wärme wird die Innenwand 218 des Behälters 200 mit einem Wärmeträgermedium 210 versehen, welches über die Zufuhreinrichtung 300 durch die Zuführungsöffnung 304 zugeführt wird.

Aufgrund der Rotation des Behälters 200 um die Drehachse 216 breitet sich das Wärmeträgermedium 210 auf der Innenwand 218 aus und bildet hierdurch einen Wärmeträgermedium-Film 212 (siehe Figur 4).

Das Wärmeträgermedium 210 wird über die Zufuhreinrichtung 300, welche am oberen Ende 202 des Behälters 200 angeordnet ist, in den Innenraum 208 des Behälters 200 zugeführt.

Das Wärmeträgermedium 210 ist von dem Ende 202, an dem es zugeführt wird, zu einem diesem Ende 202 gegenüberliegenden Ende 204 des Behälters 200, an welchem die Aperturöffnung 416 angeordnet ist, entlang der Innenwand 218 transportierbar, insbesondere förderbar, um einen kontinuierlichen Strom von Wärmeträgermedium 210 mit Solarstrahlung 112 zu beaufschlagen und somit zu erhitzen.

Die Zufuhreinrichtung 300 ist aus einer konusförmigen Vorderwand 302 und einer konusförmigen, zum Innenraum 208 des Behälters 200 gerichteten Rückwand 308 gebildet, welche koaxial und in axialer Richtung übereinander angeordnet sind. Ein Konuswinkel 316 kann beispielsweise zwischen 30° und 90°, bevorzugt zwischen 45° und 80° liegen.

Zwischen der Vorderwand 302 und der Rückwand 308 sind Leitelemente 310 in radialer Richtung 238 ausgerichtet angeordnet, welche mit der Rückwand 308 verbunden sind. Die Leitelemente 310 können in anderen Ausführungsbeispielen auch mit der Innenwand 218 oder überlappend abwechselnd mit der Rückwand 308 und der Innenwand 218 verbunden sein. Im Stand der Technik sind diese Leitelemente 310 gerade ausgebildet.

Das Wärmeträgermedium 210 wird dabei über eine in einer Spitze der konusförmigen Vorderwand 302 angeordnete Zufuhröffnung 304 in die Zufuhreinrichtung 300 eingeführt und zwischen Leitelementen 310 in radialer Richtung 238 nach außen an die Innenwand 218 der des Behälters 200 geleitet.

Das Wärmeträgermedium 210 wird bei der Rotation des Behälters 200 in Drehrichtung 236 auf der Innenwand 218 verteilt und durch die Schwerkraft g nach unten in Richtung Abfuhreinrichtung 400 geleitet.

Die Innenwand 218 des Behälters 200 weist üblicherweise eine reibungsfördernde Einrichtung 234 auf, damit das Wärmeträgermedium 210 möglichst gut an der Innenwand 218 haftet und so eine genügend lange Verweildauer im Innenraum 208 aufweist, um genügend Wärme von der Solarstrahlung 112 aufzunehmen.

Das erhitzte Wärmeträgermedium 210 steht dann zur weiteren Verwendung, beispielsweise zur Stromerzeugung in dem solarthermischen Kraftwerk 100 (Figur 1), zur Verfügung.

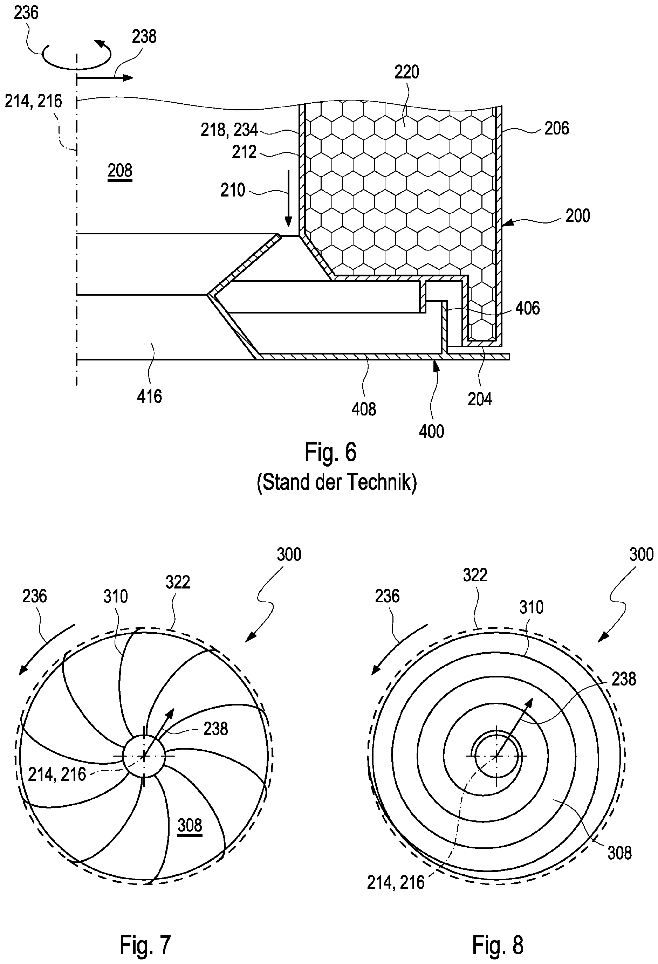

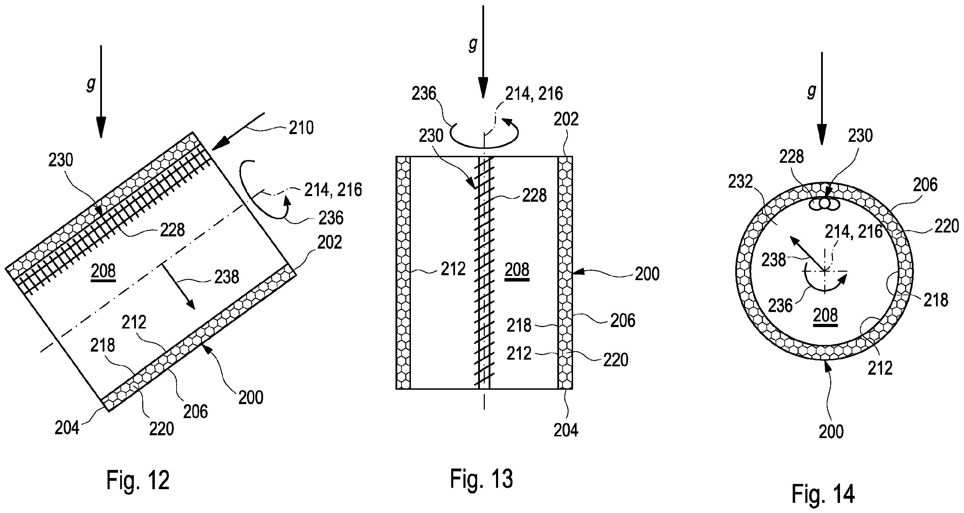

Insbesondere zur Erzeugung eines gleichmäßigen Wärmeträgermedium-Films 212 in der Solarstrahlungsempfängervorrichtung 110 werden in den Figuren 7 bis 11 mehrere Ausführungsbeispiele zur Beeinflussung der Bewegung der Partikel entlang der Innenwand 218 des Behälters 200 vorgeschlagen. In den Figuren 12 bis 16 sind günstige Ausgestaltungen des Behälters 200 beschrieben. Vorteilhaft kann damit eine Vergleichmäßigung der Temperaturverteilung in dem Behälter 200 stattfinden.

Die Abfuhreinrichtung 400 zum Ableiten des Wärmeträgermediums 210 aus dem Behälter 200 ist am gegenüberliegenden Ende 204 des Behälters 200 angeordnet und umschließt die Aperturöffnung 416, welche als Eintritt für die Solarstrahlung 112 dient.

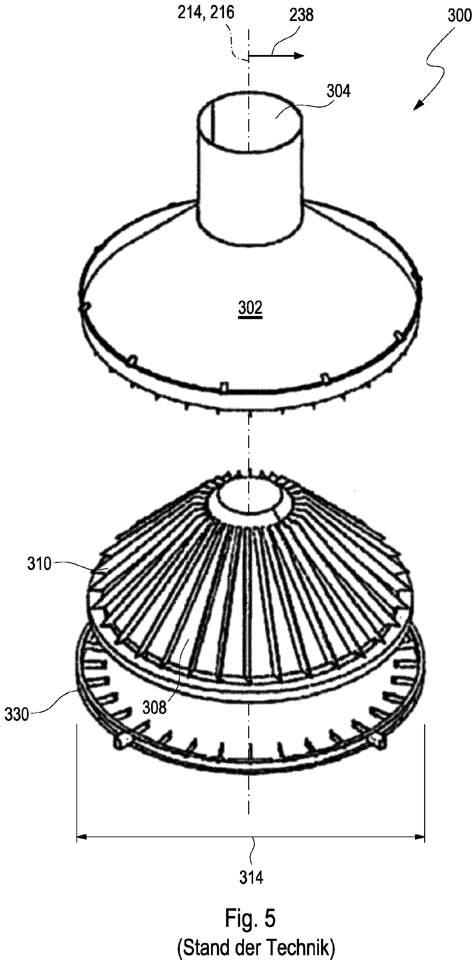

In Figur 5 ist eine Zufuhreinrichtung 300 einer Solarstrahlungsempfängervorrichtung 110 nach dem Stand der Technik in einer Explosionsdarstellung dargestellt. Die konusförmige Vorderwand 302 mündet in der Spitze des Konus in die hohlzylinderförmig ausgebildete Zuführungsöffnung 304. Die ebenfalls konusförmige Rückwand 308 weist eine Vielzahl von Leitelementen 310 auf, welche in radialer Richtung 238 nach außen verlaufen. Vorderwand 302 und Rückwand 308 sind in bestimmungsgemäßem Montagezustand auf einem Montagekranz 330 angeordnet.

Figur 6 zeigt einen Längsschnitt durch ein Ende 204 eines Behälters 200 mit einer Abfuhreinrichtung 400 nach dem Stand der Technik. Die Abfuhreinrichtung 400 weist einen ortsfest angeordneten Abfuhrring 408 auf, in dem sich der Behälter 200 um seine Drehachse 216 in Drehrichtung 236 dreht. Das Wärmeträgermedium 210 gleitet an der Innenwand 218 des Behälters 200 in Schwerkraftrichtung g nach unten und wird von dem Abfuhrring 408 aufgenommen.

Aus dem Abfuhrring 408 kann das Wärmeträgermedium 210 wieder in geeigneter Weise, beispielsweise über ein Rohr im Boden des Abfuhrrings 408, ausgeleitet werden (nicht dargestellt). Damit kein Wärmeträgermedium 210 zwischen der Außenwand 206 und dem Abfuhrring 408 in radialer Richtung 238 nach außen gelangt, weisen Außenwand 206 und Abfuhreinrichtung 400 eine Art Labyrinth-Dichtung 406 auf.

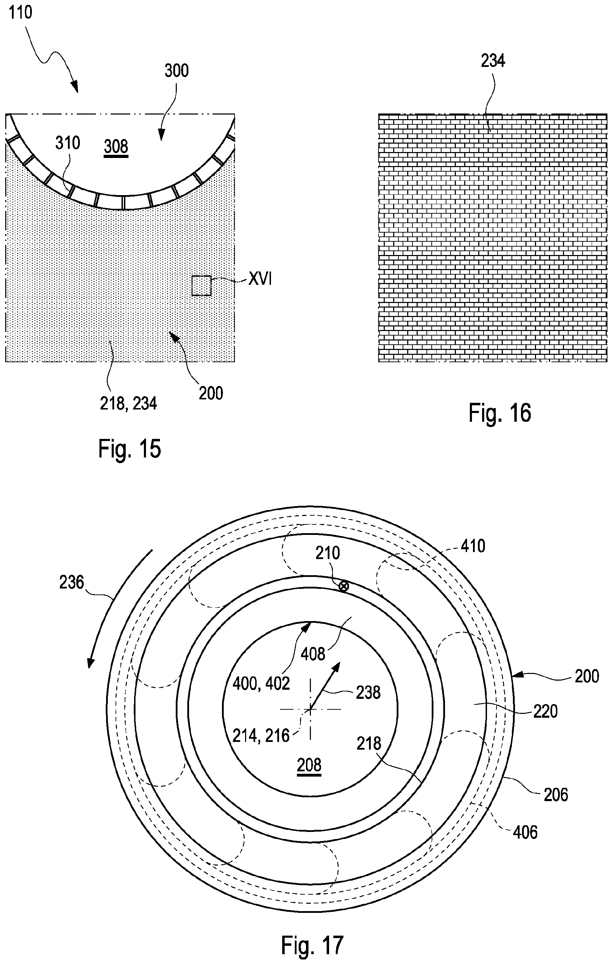

In den Figuren 17 bis 23 sind einige Ausführungsbeispiele vorgeschlagen, welche den Verlust von Partikeln beim Abführen aus dem Behälter 200 vermindern.

In den Figuren 7 bis 11 werden Ausführungsbeispiele von Zufuhreinrichtungen 300 beschrieben. In den Figuren 17 bis 23 werden Ausführungsbeispiele von Abfuhreinrichtungen 400 beschrieben. Die beschriebenen Zufuhreinrichtungen 300 und Abfuhreinrichtungen 400 können in beliebiger Kombination miteinander bei einer Solarstrahlungsempfängervorrichtung 110 eingesetzt werden. Selbstverständlich können die Zufuhreinrichtungen 300 mit bekannten Abfuhreinrichtungen kombiniert werden. Ebenso können die Abfuhreinrichtungen 400 mit bekannten Zufuhreinrichtungen kombiniert werden. Ferner können die vorgeschlagenen Zufuhreinrichtungen 300 und Abfuhreinrichtungen 400 mit den in den Figuren 12 bis 16 beschriebenen günstigen Ausgestaltungen des Behälters 200 beliebig kombiniert werden oder auch mit Ausgestaltungen des Behälters 200 aus dem Stand der Technik.

Die in den Figuren 7 bis 11 beschriebenen Ausführungsbeispiele von Zufuhreinrichtungen 300 weisen jeweils eine äußere Vorderwand 302 und eine innere Rückwand 308 auf.

Die Vorderwand 302 schließt an die äußere Außenwand 206 des Behälters 200 an. Vorteilhaft ist mit den Zufuhreinrichtungen 300 eine erfindungsgemäße Vergleichmäßigung einer räumlichen Verteilung des Wärmeträgermediums 210, insbesondere der Partikel, möglich.

Der grundsätzliche funktionale Aufbau der Solarstrahlungsempfängervorrichtung 110 mit Zufuhreinrichtung 300, Behälter 200, Abfuhreinrichtung 400 entspricht weitgehend dem bekannten Aufbau wie vorstehend beschrieben. Es wird zur Vermeidung unnötiger Wiederholungen bei den bekannten Elementen auf die vorangegangenen Figurenbeschreibungen verwiesen.

Figur 7 zeigt eine Zufuhreinrichtung 300 nach einem Ausführungsbeispiel der Erfindung in Draufsicht auf eine Rückwand 308, auf der gekrümmte Leitelemente 310 angeordnet sind.

Zwischen Vorderwand 302 und Rückwand 308 der Zufuhreinrichtung 300 sind eine Vielzahl sich in radialer Richtung 238 erstreckende gekrümmte Leitelemente 310 angeordnet.

Die mit dem Behälter 200 (Figur 2, 3) mitrotierende Rückwand 308 weist dabei von der Rückwand 308 in Richtung Vorderwand 302 abstehende, insbesondere senkrecht zur Rückwand 308 stehende, Leitelemente 310 auf, die beispielsweise als aufgeschweißte Bleche ausgeführt sind. Im dargestellten Ausführungsbeispiel sind die Leitelemente 310 sichelförmig ausgestaltet. Insbesondere sind die Leitelemente 310 entgegen der Drehrichtung 236 gekrümmt, d.h. die Leitelemente 310 weisen demzufolge beim Durchlaufen in radialer Richtung 238 von radial innen nach radial außen eine Richtungsänderung auf, welche der Drehrichtung 236 entgegensteht. Die Partikel des Wärmeträgermediums 210 werden durch die Zuführungsöffnung 304 zentral zugeführt.

Durch die gekrümmten Leitelemente 310 wird die Geschwindigkeit des Wärmeträgermediums 210 in radialer Richtung 238 reduziert und hierdurch die Aufenthaltsdauer im Bereich der Leitelemente 310 erhöht. Während dieser Zeit nehmen die Partikel über die Rückwand 308 und die Leitelemente 310 Wärme auf und kühlen damit gleichzeitig die Rückwand 308.

Die Leitelemente 310 sind vorteilhaft so gekrümmt, dass die Partikel im radial äußeren Bereich so umgelenkt werden, dass die radiale, nach außen gerichtete Geschwindigkeitskomponente reduziert wird. Die Krümmung kann dabei in Drehrichtung 236 oder gegen die Drehrichtung 238 erfolgen.

Vorzugsweise weisen die Leitelemente 310 einen guten thermischen Kontakt mit der Rückwand 308 auf.

Die Leitbleche 310 und die Rückwand 308 werden vorteilhaft so ausgeführt, dass die Partikel einen möglichst guten und langen Kontakt mit diesen Flächen haben, um zur Kühlung der Rückwand 308 und zur Vorheizung der Partikel möglichst viel Wärme aufzunehmen.

Die Leitelemente 310 sind auf der Rückwand 308 der Zufuhreinrichtung 300 angeordnet. Die Leitelemente 310 können jedoch in anderen Ausführungsbeispielen auch mit der Innenwand 206 oder überlappend abwechselnd mit der Rückwand 308 und der Innenwand 206 verbunden sein. Insbesondere kann dabei eine Höhe 312 (siehe Definition der Höhe 312 in Figur 2) des jeweiligen Leitelements 310 wenigstens teilweise und/oder abschnittsweise einem Abstand 328 (Figur 2) zwischen Vorderwand 302 und Rückwand 308 entsprechen.

Die Leitelemente 310 können so eine begrenzte Höhe 312 haben. In diesem Fall können Partikel bei hohen Massenströmen von Partikeln über die Leitelemente 310 schneller in radialer Richtung 238 nach außen fließen.

An einem radialen Außenrand der Rückwand 308 ist eine Verteilungseinrichtung 322 angeordnet, welche zur Vergleichmäßigung der räumlichen Verteilung des Wärmeträgermediums 210 ausgebildet ist. Die Partikel des Wärmeträgermediums 210 können möglichst gleichmäßig über die Innenwand des Behälters 200 verteilt eintreten.

Die Verteilungseinrichtung 322 kann als Zylindersegment, beispielsweise aus einem Lochblech ausgebildet sein. Die Verteilungseinrichtung 322 hat dabei die Funktion, die Partikel selbst dann gleichmäßig über den Umfang ausströmen zu lassen, wenn die vorangegangenen Auslässe, durch einen Austritt aus den Leitblechen, örtlich begrenzt sind.

In Figur 8 ist eine Draufsicht auf eine Rückwand 308 einer Zufuhreinrichtung 300 nach einem weiteren Ausführungsbeispiel der Erfindung dargestellt. Das Leitelement 310 verläuft dabei spiralförmig von der Zuführungsöffnung 304 in radialer Richtung 238 nach radial außen. Auch in diesem Fall ist das Leitelement 310 entgegen der Drehrichtung 236 spiralförmig um die Drehachse 214 gekrümmt und verlangsamt damit die Geschwindigkeit der Partikel des Wärmeträgermediums 210.

Das Leitelement 310 ist bevorzugt spiralförmig ausgeführt, sodass die Partikel langsam entlang des Leitelements 310 und der Rückwand 308 nach unten rutschen. Eine solche Funktion kann auch über mehrere spiralförmig verlaufende Leitelemente 310 ausgeführt werden.

Vorzugsweise weisen die Leitelemente 310 einen guten thermischen Kontakt mit der Rückwand 308 auf.

Die spiralförmige Ausführung des Leitelements 310 bewirkt, dass die Partikel erst nach mehreren Umdrehungen der Rückwand 308 die Verteilungseinrichtung 322 erreichen.

Durch die lange Aufenthaltszeit kann ein hoher Wärmeaustausch zwischen Rückwand 308, Leitelement 310 und Partikeln zur Kühlung der Rückwand 308 und Vorheizung der Partikel erreicht werden.

Die Verteilungseinrichtung 322 kann als Zylindersegment, beispielsweise aus einem Lochblech, ausgebildet sein. Die Verteilungseinrichtung 322 hat dabei die Funktion, die Partikel selbst dann gleichmäßig über den Umfang ausströmen zu lassen, wenn die vorangegangenen Auslässe, durch einen Austritt aus den Leitblechen, örtlich begrenzt sind.

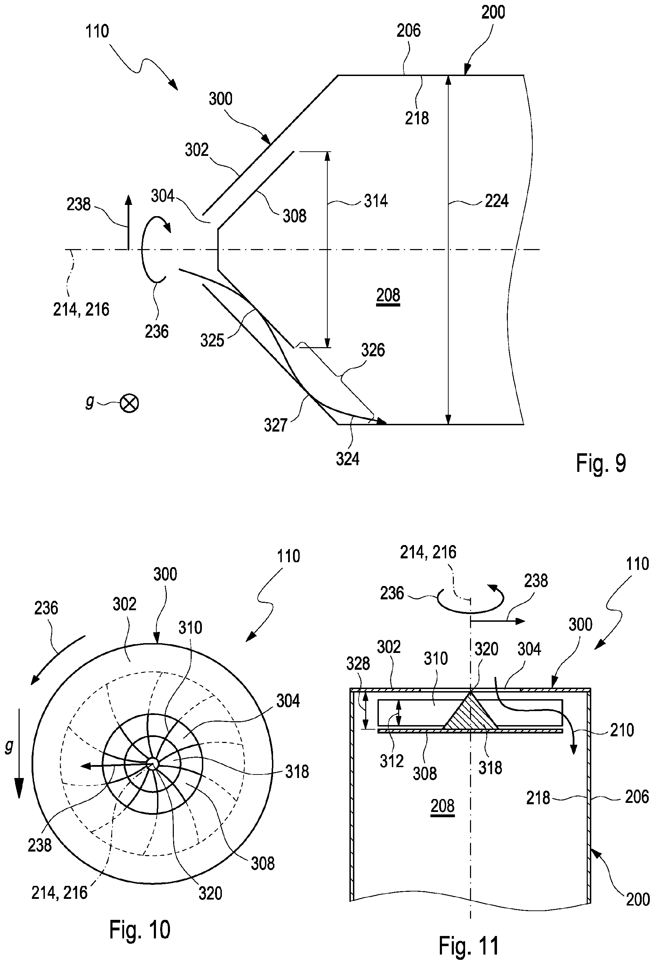

Figur 9 zeigt einen Längsschnitt durch eine Zufuhreinrichtung 300 mit einer äußeren Vorderwand 302 und einer inneren Rückwand 308 nach einem weiteren Ausführungsbeispiel der Erfindung, bei dem die Rückwand 308 in axialer Richtung gegenüber der Vorderwand 302 verkürzt ist. Die konisch ausgebildete Vorderwand 302 schließt an ihrem maximalen Durchmesser an die Außenwand 206 des Behälters 200 an.

Die Außenwand 206 und Innenwand 218 sind vereinfacht ohne thermische Isolierung dargestellt.

Ein maximaler Durchmesser 314 der konisch ausgebildeten Rückwand 308 der Zufuhreinrichtung 300 ist dabei kleiner als ein Innendurchmesser 224 der Innenwand 218 des Behälters 200.

Insbesondere kann der Durchmesser 314 der Rückwand 308 höchstens 95%, bevorzugt höchstens 60%, des Innendurchmessers 224 der Innenwand 218 des Behälters 200 betragen. Die Vorderwand 302 und die Rückwand 308 der Zufuhreinrichtung 300 sind konusförmig ausgebildet. Insbesondere kann ein Konuswinkel 316 zwischen 30° und 90°, bevorzugt zwischen 45° und 80° liegen. Die Zuführungsöffnung 304 ist bevorzugt in einer Spitze des Konus angeordnet. Die Zuführungsöffnung 304 kann dabei exzentrisch angeordnet sein.

Der als Rückwand 308 ausgebildete innere Konus der Zufuhreinrichtung 300 kann somit kürzer als im Stand der Technik üblich gebaut werden. In Abhängigkeit des Designpunktes und der Mindestdrehzahl des Behälters 200 kann die radiale Position der Partikel des Wärmeträgermediums 210 bestimmt werden, ab welcher diese nicht mehr über die Rückwand 308 gleiten, sondern durch die Zentrifugalkraft zunächst an den äußeren Konus der Vorderwand 302 der Zufuhreinrichtung 300 gedrückt werden, von wo sie auf die Innenwand 218 des Behälters 200 geleitet werden. Die Strömung des Wärmeträgermediums 210 ist in der Figur als wellenförmiger Pfeil 324 dargestellt, der andeutet, dass die Partikel von der Zufuhröffnung 304 zunächst auf die Außenseite der Rückwand 308 gelangen, von dort ab einem bestimmten Abhebepunkt 325 zu einem Auftreffpunkt 327 auf der Innenseite der Vorderwand 302 wechseln und von dort schließlich auf die Innenfläche 218 gelangen. Ein Teil des inneren Konus der Rückwand 308 im Bereich zwischen dem Abhebepunkt 325 der Partikel von der Rückwand 308 und der Innenwand 218 kann eingespart werden. Stattdessen ist dort ein ringförmiger Spalt 326 ausgebildet. Dies ermöglicht eine frühzeitige solare Bestrahlung der Partikel bereits in der Zuführung. Hierdurch können Fertigungskosten der Zufuhreinrichtung 300 gesenkt werden. Weiterhin kann die Erwärmung der Partikel verbessert werden. Folglich können kürzer bauende Behälter 200 eingesetzt werden.

In Figur 10 ist eine Draufsicht auf eine Ausgestaltung einer Zufuhreinrichtung 300 nach einem weiteren Ausführungsbeispiel der Erfindung dargestellt, während in Figur 11 ein Längsschnitt der Zufuhreinrichtung 300 gezeigt ist.

Bei diesem Ausführungsbeispiel ist die Rückwand 308 der Zufuhreinrichtung 300 nicht konisch, sondern als ebene Fläche ausgebildet, welche schräg, bevorzugt senkrecht, zur Längsachse 214 ausgerichtet ist.

Dabei ist in der Längsachse 214 ein mit einer Kegelspitze 320 zur Zuführungsöffnung 304 gerichteter Kegel 318 zur Verteilung des Wärmeträgermediums 210 angeordnet. Ebenso kann auch die Vorderwand 302 nicht konisch, sondern als ebene Fläche ausgeführt sein.

Vorteilhaft wird bei diesem Ausführungsbeispiel der übliche konusförmige Aufbau der Zufuhreinrichtung 300 mit bis zu 45° Konuswinkel vereinfacht als flacher Trichter ohne Neigungswinkel ersetzt. Es können zur Beschleunigung der Partikel des Wärmeträgermediums 210 in radialer Richtung 238 nach außen weiterhin Leitelementen 310 wie beispielsweise auf der Außenseite der Rückwand 308 angeschweißte Führungsbleche angeordnet sein. Diese können beispielsweise vorgebogen eingesetzt werden und nur an den Enden in radialer Richtung 238 angeschweißt sein. Durch die Vorbiegung ist die Beulrichtung bei thermischer Längenausdehnung der Leitelemente 310 vorgegeben. Die Vorbiegung der Leitelemente 310 weist weiterhin den Vorteil auf, dass damit der Abgabepunkt der Partikel von der Zufuhreinrichtung 300 an die Innenwand 218 des Behälters 200 günstig näher zur Zufuhreinrichtung 300 verschoben werden kann.

Im Mittelpunkt des flachen Trichters ist der Kegel 318 angeordnet, der die zugeführten Partikel aus einem stationären Rohr als Zufuhröffnung in radiale Richtung 238 schonend umlenkt. Die Partikel können beispielsweise im oberen Viertel des Kegels 318 zugeführt werden, sodass diese möglichst am unteren Umfang an die Innenwand 218 des Behälters 200 abgeben werden können. Durch diese Ausführung können die Komponenten kostengünstiger und platzsparender ausgeführt werden.

Figur 12 zeigt einen Längsschnitt durch einen Behälter 200 mit einer Fördervorrichtung 230 und daran angeordneten schaufelartigen Leitstrukturen 228 nach einem weiteren Ausführungsbeispiel der Erfindung. In Figur 13 ist ein weiterer Längsschnitt durch den Behälter 200, und in Figur 14 ein Querschnitt durch den Behälter 200 dargestellt.

Bei diesem Ausführungsbeispiel ist im Innenraum 208 des Behälters 200 wenigstens eine parallel oder leicht geneigt, insbesondere kleiner 10°, bevorzugt kleiner 5°, geneigt zur Längsachse 214 und benachbart zur Innenwand 218 verlaufende Fördervorrichtung 230 angeordnet, welche über seine Länge verteilt angeordnete Leitstrukturen 228, insbesondere schaufelartige Leitstrukturen 228, aufweist. Die Leitstrukturen 228 sind zum Fördern des Wärmeträgermediums 210 bei rotierendem Behälter 200 in Richtung des ersten Endes 202 oder des zweiten Endes 204 des Behälters 200 ausgebildet. Die Fördervorrichtung 230 ist ortsfest mit einer außerhalb des Behälters 200 angeordneten, nicht dargestellten Aufnahmeeinrichtung fest verbunden.

Die Fördervorrichtung 230, welche beispielsweise eine Haltevorrichtung aufweist, die als Rohr oder Gitter ausgebildet sein kann, kann bevorzugt an beiden Enden nicht mitrotierend, d.h. fest gehaltert angeordnet sein. Die Fördervorrichtung 230 kann vorzugsweise, ebenso wie die Leitstrukturen 228, hochtemperaturbeständig, beispielsweise aus Siliziumkarbid, ausgebildet sein.

Bei einer Ausführung als Rohr kann die Haltevorrichtung zur Partikelzufuhr über die Rückwand 308 genutzt werden. Dann kann am unteren Ende des Rohrs eine geeignete Ausleitvorrichtung angebracht sein, beispielsweise so, dass die Partikel in Drehrichtung der Zylinderwand 206 ausströmen.

Alternativ können die Partikel des Wärmeträgermediums 210 auch über den Randbereich der Aperturöffnung 416 am zweiten Ende 204 des Behälters 200 zugeführt werden.

Die schaufelartigen Leitstrukturen 228 sind so ausgebildet, die Partikel der Wärmeträgermediums 210, die sich mit der rotierenden Behälterwand 206 an den Schaufeln 228 vorbeibewegen, bei einer Umdrehung um etwa eine Schaufelhöhe in Richtung der Rotationsachse 216 versetzt werden, beispielsweise in Richtung Rückwand 308, alternativ auch in Richtung Aperturöffnung 416.

Vorteilhaft kann durch die Nutzung von im Behälter angeordneten schaufelartigen Leitstrukturen 228 eine fest definierte Partikelunterschicht des Wärmeträgermedium-Films 212 erzeugt werden, wobei die sich darüber ablagernden Partikel abgehoben und befördert werden. Dadurch können für die Innenwand 218 des Behälters 200 wesentlich größere Toleranzen zugelassen werden, die durch die stationäre Partikelunterschicht ausgeglichen werden.

In einer alternativen Ausführungsform kann die Fördervorrichtung 230 auch zum Weiterleiten des am zufuhrseitigen ersten Ende 202 des Behälters 200 über die Zufuhreinrichtung 300 zugeführten Wärmeträgermediums 210 zum abfuhrseitigen zweiten Ende 204 ausgebildet sein.

Dabei wird das Wärmeträgermedium 210 mit niedriger Temperatur dem Ende 204 des Behälters 200, an dem aufgeheiztes Wärmeträgermedium 210 vorliegt, zugeführt.

Die Partikelzufuhr kann prinzipiell auch durch die Aperturöffnung 416 erfolgen oder alternativ über die Fördervorrichtung 230 von dem entgegengesetzten Ende 202 zu der Aperturöffnung 416.

Üblicherweise erfolgt die Partikelzufuhr jedoch in den Behälter 200 von dem der Aperturöffnung 416 abgewandten Ende 202 des Behälters 200. Schaufelartige Leitstrukturen 228 können dazu vorteilhaft an der Fördervorrichtung 230 angeordnet sein.

Durch die Fördervorrichtung 230 können die Partikel mit niedriger Temperatur dem abfuhrseitigen Ende 204 des Behälters 200 zugeführt werden. Damit kann gleichzeitig eine Kühlung der Fördervorrichtung 230 erfolgen.

In einer weiteren alternativen Ausführungsform kann die Fördervorrichtung 230 auch zum Weiterleiten des aufgeheizten Wärmeträgermediums 210 vom aperturseitigen zweiten Ende 204 zum der Aperturöffnung 416 abgewandten ersten Ende 202 ausgebildet sein. Auf diese Weise kann eine Vergleichmäßigung der Temperaturverteilung in dem Behälter 200 stattfinden. Eine Abführung der Partikel kann beispielsweise durch einen Überlauf am zufuhrseitigen Ende 202 des Behälters 200 erfolgen.

Wie in dem in Figur 14 dargestellten Ausführungsbeispiel erkennbar, kann die Fördervorrichtung 230 in bestimmungsgemäßem Gebrauchszustand bezüglich einer Schwerkraftrichtung g in einem bezogen auf die Schwerkraftrichtung g oberen Bereich 232 des Innenraums 208 des Behälters 200 angeordnet sein.

Vorteilhaft kann, insbesondere bei einem liegenden Behälter 200, die Fördervorrichtung auch auf einem von der Solarstrahlung nicht bestrahlten Bereich der Innenseite 218 des Behälters 200, also auf einer bezüglich der Schwerkraftrichtung g unten liegenden Seite angeordnet sein. Eine solche Anordnung kann bei bestimmten Granulaten möglicherweise vorteilhaft sein, obwohl die Partikel fester zusammenhalten.

Bei einer Anordnung der Fördervorrichtung 230 mit schaufelartigen Leitstrukturen 228 im oberen Bereich 232 des Innenraums 208 wirken Schwerkraft und Zentrifugalkraft auf die Partikel in entgegengesetzter Richtung. Damit sind die Partikel im Wärmeträgermedium-Film 212 nur relativ gering verpresst und lassen ein Abheben vom Wärmeträgermedium-Film 212 und ein weiteres Befördern vorteilhaft zu. Außerdem trifft in diesem Bereich 232 hauptsächlich die konzentrierte solare Strahlung von Heliostaten 104 (Figur 1) auf, die nahe am Turmreceiver 114 (Figur 1) stehen und damit vergleichsweise kleine Brennflecke erzeugen, die über eine Zielpunktstrategie etwas zur Seite verschoben werden können. Dadurch lässt sich die Belastung auf eine Haltevorrichtung der Solarstrahlungsempfängervorrichtung 200 reduzieren.

In einer nicht dargestellten Ausführungsform kann die Innenwand 218 des Behälters 200 eine Vielzahl von verteilt angeordneten Leitstrukturen 228, insbesondere schaufelartigen Leitstrukturen 228, aufweisen, welche zum Fördern des Wärmeträgermediums 210 bei rotierendem Behälter 200 in Richtung des zufuhrseitigen Endes 202 ausgebildet sind. Eine solche Anordnung entspricht einem sogenannten Drehrohr-Receiver mit mitbewegten Leitstrukturen 228, die eine Förderung mit oder entgegen der Schwerkraft bewirken. Dabei liegt das Wärmeträgermedium 210 jeweils nur in einem Teilbereich des Behälters 200 vor und wird beim Nachrutschen durch die Leitstrukturen 228 versetzt.

Die Partikelbewegung des Wärmeträgermediums 210 im Behälter 200 erfolgt im Wesentlichen durch die Schwerkraft. Der Behälter 200 ist dabei mit der Aperturöffnung 416 nach unten geneigt. Die höchsten Temperaturen treten nahe der Aperturöffnung 416 auf.

Durch Umkehr der Partikelströmungsrichtung im Behälter 200 von unten nach oben kann das Temperaturprofil im Innenraum des Behälters 200 so verändert werden, dass die höchsten Temperaturen nahe der Rückwand 308 tief im Inneren des Behälters 200 auftreten. Dadurch können die thermischen Verluste durch thermische Strahlung und Konvektion vorteilhaft reduziert werden.

Figur 15 zeigt eine Draufsicht auf eine Innenwand 218 eines Behälters 200 mit einer darauf angeordneten reibungsfördernden Einrichtung 234 nach einem weiteren Ausführungsbeispiel der Erfindung. In Figur 16 ist die reibungsfördernde Einrichtung 234 in einer vergrößerten Darstellung erkennbar.

Vorteilhaft kann die reibungsfördernde Einrichtung 234 an der Innenwand 218 des Behälters 200 mittels eines additiven Fertigungsverfahrens gefertigt und direkt mit der Innenwand 208 des Behälters 200 verbunden sein. In einer optionalen Ausführungsform kann die reibungsfördernde Einrichtung 234 damit beispielsweise gitterförmig ausgebildet sein, jedoch können auch andere Strukturierungen an der Innenwand 218 des Behälters vorteilhaft sein.

Ein als reibungsfördernde Einrichtung üblicherweise aufgeschweißtes Gitter auf der Innenwand 218 des Behälters 200 kann durch Strukturierung mittels eines additiven Fertigungsverfahrens wie beispielsweise 3D-Druck vorteilhaft ersetzt werden. Die durch 3D-Druck gefertigte Einrichtung kann vor oder nach der Fertigung des Behälters 200 aufgebracht werden.

Der Einsatz von 3D-Druck weist mehrere Vorteile auf. Beispielsweise kann flexibel jede Art von Strukturierung aufgebracht werden.

Beispielsweise können für verschiedene Partikeldurchmesser oder zur Beeinflussung der Bewegung der Partikel in bestimmten Abschnitten des Behälters 200 unterschiedliche Strukturen oder Maschenweiten einer gitterförmigen Struktur an unterschiedlichen Bereichen der Innenwand 218 des Behälters 200 angeordnet werden. Ferner kann die reibungsfördernde Einrichtung 234 als Strukturierung fest mit der Innenwand 218 des Behälters 200 verbunden werden, sodass sie nicht abheben kann.

Die in den Figuren 17 bis 23 beschrieben Ausführungsbeispiele von Abfuhreinrichtungen 400 sind jeweils am abfuhrseitigen Ende 204 des Behälters 200 angeordnet.

Der grundsätzliche funktionale Aufbau der Solarstrahlungsempfängervorrichtung 110 mit Zufuhreinrichtung 300, Behälter 200, Abfuhreinrichtung 400 entspricht weitgehend dem bekannten Aufbau wie vorstehend beschrieben. Es wird zur Vermeidung unnötiger Wiederholungen bei den bekannten Elementen auf die vorangegangenen Figurenbeschreibungen verwiesen. Vorteilhaft ermöglichen die vorgeschlagenen Zufuhreinrichtungen 300 erfindungsgemäß eine Verminderung des Risikos, Partikel beim Abführen aus dem Behälter 200 zu verlieren.

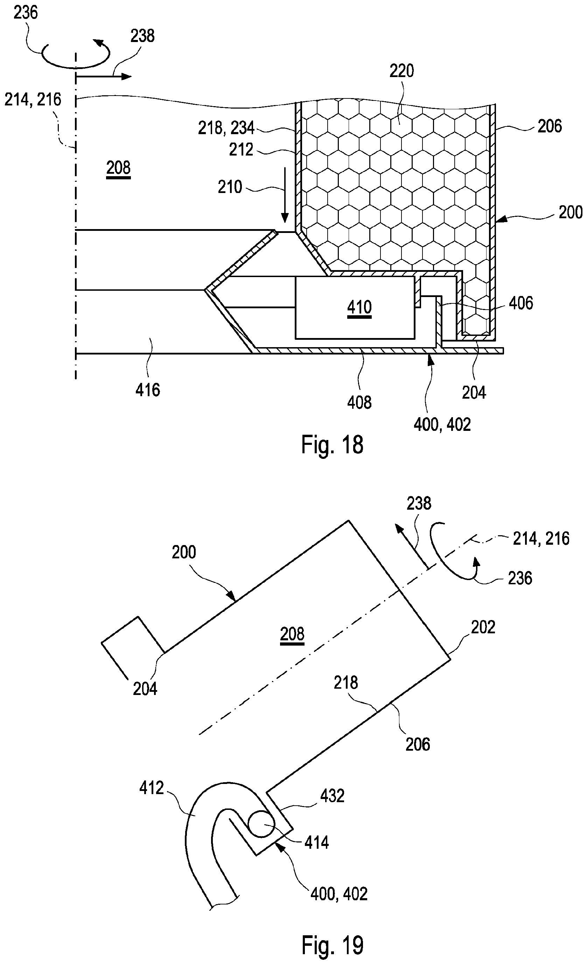

Figur 17 zeigt einen Querschnitt durch eine Abfuhreinrichtung 400 nach einem weiteren Ausführungsbeispiel der Erfindung mit einer Einrichtung 402 mit schaufelartigen Leitelementen 410. In Figur 18 ist ein Längsschnitt durch die Abfuhreinrichtung 400 dargestellt.

Die Einrichtung 402 weist eine Vielzahl von in eine radiale Richtung 238 abstehenden Leitelementen 410 auf, welche am abfuhrseitigen Ende 204 des Behälters 200 zwischen Außenwand 206 und Abfuhreinrichtung 400 angeordnet sind.

Die Einrichtung 402 rotiert mit dem Behälter 200 mit und greift mit den Leitelementen 410 in den feststehenden Abfuhrring 408 ein. Die Leitelemente 410 sind entlang ihrer Erstreckung zwischen Innenwand 218 und Außenwand 206 in Richtung der bestimmungsgemäßen Drehrichtung 236 gekrümmt. Es können eine Mehrzahl von äquidistant angeordneten Leitelementen 410 vorgesehen sein, die beispielsweise sichelartig gekrümmt ausgebildet sind.

Radiale Schaufeln sind so als Leitelemente 410 am abfuhrseitigen Ende 204 des rotierenden Behälters 200 am Übergang zu dem statischen Sammelring 408 der Abfuhreinrichtung 400 angeordnet. Partikel des Wärmeträgermediums 210 gleiten an der Innenwand 218 des Behälters 200 entlang nach unten in den Abfuhrring 408 der Abfuhreinrichtung 400. Die Leitelemente 410 lenken die Partikel um und beschleunigen die Partikel so im rotierenden Bezugssystem, dass sie im stehenden Bezugssystem eine deutlich niedrigere Geschwindigkeit haben. Somit kann der Abrieb durch unvermeidbares Aneinanderprallen der Partikel im Sammelring 408 reduziert werden. Der Abrieb am Sammelring 408 kann insbesondere dadurch stark reduziert werden, dass die Auftreffgeschwindigkeit der Partikel kleiner wird. Bei zu starkem Abrieb müssen Partikel von Zeit zu Zeit ersetzt werden. Weiter kann ein Verlust an Partikeln vermindert werden. Je geringer der Partikelverlust an dieser Stelle ist, desto weniger Partikel müssen dem System mit der Zeit wieder zugeführt werden.

Die Leitelemente 410 können auch spiralförmig von der Innenwand 218 nach radial außen verlaufend ausgebildet sein. Durch die spiralförmige Ausgestaltung der Leitelemente 410 können Partikel des Wärmeträgermediums 210 günstig abgebremst werden, um den Abrieb durch Aneinanderprallen beim Abführen der Partikel zu reduzieren. Je geringer der Partikelverlust an dieser Stelle ist, desto weniger Partikel müssen dem System mit der Zeit wieder zugeführt werden.

Figur 19 zeigt einen Längsschnitt durch ein Ende eines Behälters 200 mit einer Abfuhreinrichtung 400 nach einem weiteren Ausführungsbeispiel der Erfindung mit einem Rohr 412 am abfuhrseitigen Ende 204 des Behälters 200 zum Ausleiten des Wärmeträgermediums 210 aus dem Behälter 200.

Das Rohr 412 ist mit einer außerhalb des Behälters 200 angeordneten Aufnahmeeinrichtung (nicht dargestellt) fest verbunden. Das Rohr 412 ist am abfuhrseitigen Ende 204 des Behälters 200 mit einer Rohröffnung 414 entgegen der bestimmungsgemäßen Drehrichtung 236 des Behälters 200 angeordnet und ist zur Aufnahme des aufgeheizten Wärmeträgermediums 210 ausgebildet.

Der Behälter 200 weist am abfuhrseitigen Ende 204 eine von der Außenwand 206 nach radial außen gerichtete, auf einem Umfang des Behälters 200 umlaufende Ausbuchtung 432 auf, in welche die Rohröffnung 414 hineinragt.

Dabei kann das Rohr 412 am abfuhrseitigen Ende 204 des Behälters 200 mit der Rohröffnung 414 entgegen der bestimmungsgemäßen Drehrichtung 236 des Behälters 200 angeordnet sein.

Die Partikel des Wärmeträgermediums 210 verlassen in dieser Ausführungsform den rotierenden Teil des Behälters 200 nicht wie im Stand der Technik über die einfache axiale Weiterbewegung über das untere Ende 204 des zylindrischen rotierenden Behälters 200, wo die Partikel in einem umlaufenden Ring gesammelt werden. Die Partikel werden vielmehr bei diesem Ausführungsbeispiel über von einem gegenüber der Umgebung feststehenden Rohr 412 aufgenommen. Dieses ist tangential am unteren Ende 204 des rotierenden Behälters 200 angebracht.

Optional kann wie abgebildet am Ende 204 der Außenwand 206 des rotierenden Behälters 200 eine radial nach außen ragende Ausbuchtung 432 angebracht sein, in welche das feststehende Rohr 412 hineinragt. Durch die Ausbuchtung 432 erhöht sich die Wahrscheinlichkeit deutlich, dass alle Partikel den Behälter 200 über das Rohr 412 verlassen.

Das Rohr 412 kann bei einer alternativen, nicht dargestellten Ausführungsform mit einer Saugeinrichtung verbunden sein, sodass das aufgeheizte Wärmeträgermedium in die Rohröffnung 414 gesaugt wird. Dabei können die Partikel des Wärmeträgermediums 210 mit Unterdruck absaugt werden.

Hierdurch können die Fertigungskosten gesenkt werden, da wesentlich weniger Isolierung und hitzebeständiges Material benötigt wird. Weiterhin kann durch die Absaugung auch Staub abgesagt und abgeschieden werden, wodurch sowohl optische Strahlungsverluste durch Staub in der Luft im Innenraum 208 des Behälters 200 minimiert werden können als auch, dass weniger Staub an die Umwelt abgegeben wird.

Ferner wird damit die thermische Masse der Sammelvorrichtung reduziert, die sich im laufenden Betrieb erwärmen würde und den Partikeln Energie entziehen kann. Auf diese Weise können Anfahrprozesse mit sonst geringerem Wirkungsgrad aufgrund der Erwärmung der Bauteile zeitlich verkürzt und optimiert werden.

Alternativ oder zusätzlich kann eine auf die Rohröffnung 414 gerichtete Fluidströmung, insbesondere Druckluft, vorgesehen sein, welche zum Transport des aufgeheizten Wärmeträgermediums 210 in die Rohröffnung 414 ausgebildet ist. Dabei können die Partikel des Wärmeträgermediums 210 mittels Druckluft gezielt in das tangential angeordnete Rohr 412 geblasen werden. Dies kann auch in Kombination mit dem Ansaugen der Partikel durch Unterdruck erfolgen.

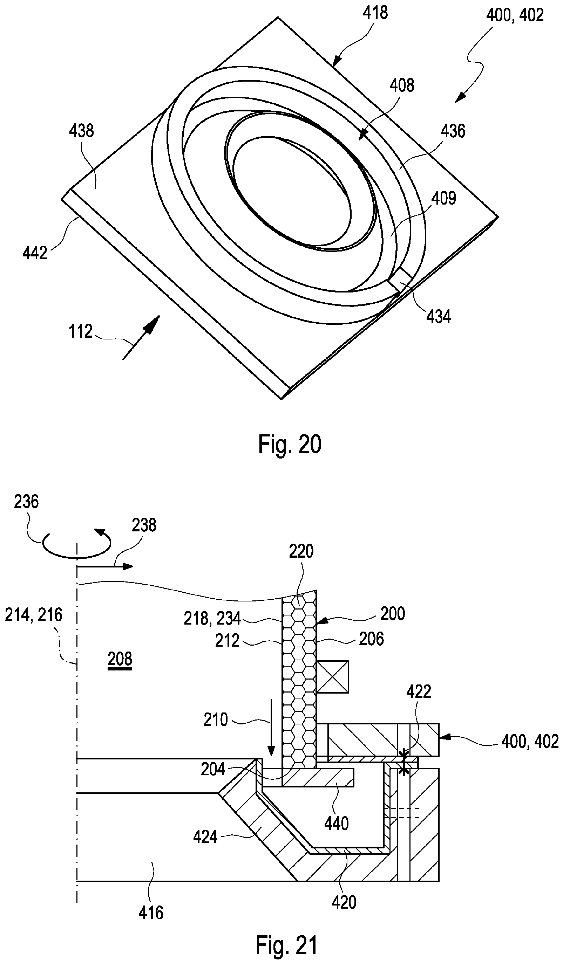

In Figur 20 ist eine isometrische Darstellung eines Ausschnitts einer Abfuhreinrichtung 400 nach einem weiteren Ausführungsbeispiel der Erfindung mit einem in einen Strahlungsschutz integrierten Abfuhrring 408 dargestellt.

Die Einrichtung 402 weist einen durch einen Abfuhrring 408 und eine radial außen begrenzende Ringstruktur 436 gebildeten Kanal 409 als Sammelring auf, wobei die Ringstruktur 436 eine Abführungsöffnung 434 zum Austritt des aufgeheizten Wärmeträgermediums 210, d.h. der Partikel, aufweist. Die Abfuhrring 408 mit Kanal 409 und Ringstruktur 436 ist mit einer als Strahlungsschutz gegen die auftreffende Solarstrahlung 112 ausgebildeten Platte 418 verbunden. Die Platte 418 kann wenigstens auf einer Seite 442 mit einer Isolierung und/oder mit einer Fluidkühleinrichtung ausgebildet sein.

Der Kanal 409 dient zum Sammeln der Partikel des Wärmeträgermediums 210. Dabei können die Partikel über die Abführungsöffnung 434 nach außen abgeleitet werden.

Bei der in Figur 20 dargestellten Ausführungsform kann der Abfuhrring 408 mit dem Kanal 409 und der Ringstruktur 436 der Abfuhreinrichtung 400 in die als Strahlungsschutz ausgebildete Platte 418 integriert sein, wodurch Fertigungskosten und Montageaufwand reduziert werden kann.

Die Platte 418 der in den Strahlungsschutz integrierten Abfuhreinrichtung 400 kann vorteilhaft beidseitig isoliert und beispielsweise aktiv über eine Fluidkühleinrichtung gekühlt sein, damit die Trägerstruktur nicht versagt. Auf der einen Seite 438 der Platte 418 können der Abfuhrring 408 mit Kanal 409 und Ringstruktur 436 als Sammelring aufgebracht sein, während die andere Seite 442 der Platte 418 direkt als Strahlungsschutzisolierung ausgebildet sein kann. Hierdurch können Fertigungskosten der Abfuhreinrichtung 400 weiter reduziert werden.

Figur 21 zeigt einen Längsschnitt durch eine Abfuhreinrichtung 400 nach einem weiteren Ausführungsbeispiel der Erfindung mit einer Abdeckung 420, die als radiale Labyrinth-Dichtung ausgebildet ist.

Die Abfuhreinrichtung 400 umfasst eine Einrichtung 402, die eine am abfuhrseitigen Ende 204 des Behälters 200 angeordnete, in radialer Richtung wirkende Abdeckung 420 aufweist. Ferner weist die Einrichtung 402 einen am abfuhrseitigen Ende 204 der Wandung des Behälters 200 radial nach außen gerichteten Absatz 440 auf, der die Außenwand 206 radial nach außen überragt. Der Absatz 440 ist von der Abdeckung 420 in Form einer Labyrinth-Abdeckung umgeben. Weiter ist die Abdeckung 420 von einer in radialer Richtung 238 wirkenden und in axialer Richtung 214 wirkenden thermischen Isolierung 424 umgeben.

Die Abdeckung 420 kann beispielsweise als radiale Labyrinth-Dichtung aus Blech ausgebildet sein. Dadurch kann die Abdichtung der Abfuhreinrichtung 400 verbessert werden und einem Partikelverlust durch aus der Abfuhreinrichtung 400 austretende Partikel vorgebeugt werden. Je geringer der Partikelverlust an dieser Stelle ist, desto weniger Partikel müssen dem System mit der Zeit wieder zugeführt werden. Somit könnten die Kosten im Betrieb weiter gesenkt werden.

Der am abfuhrseitigen Ende 204 der Wandung des Behälters 200 angeordneter Absatz 440 stellt vorteilhaft eine weitere Verbesserung der Abdichtung zwischen der feststehenden Abfuhreinrichtung 400 und der Außenwand 206 des rotierenden Behälters 200 dar.

Eine thermische Isolierung 424, welche die Abdeckung 420 nach außen umgibt, kann vorteilhaft weiteres Potential für einen höheren Wirkungsgrad beim Einsatz der erfindungsgemäßen Solarstrahlungsempfängervorrichtung 110 liefern.

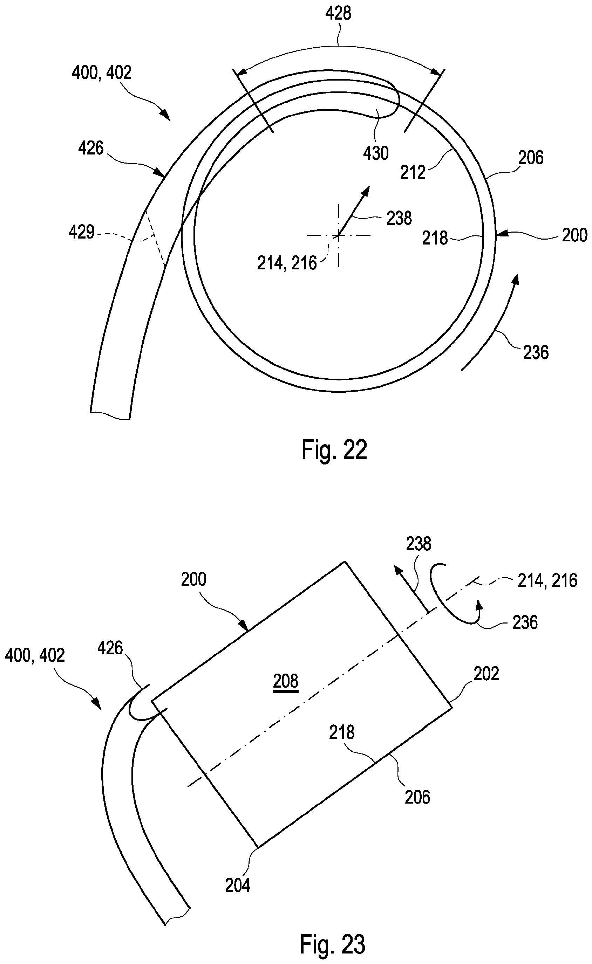

Figur 22 zeigt einen Querschnitt durch eine Abfuhreinrichtung 400 nach einem weiteren Ausführungsbeispiel der Erfindung mit einer radial das Wärmeträgermedium 210 abführenden Sammeleinrichtung 426. In Figur 23 ist ein vergrößerter Längsschnitt durch die Abfuhreinrichtung 400 dargestellt.

Die Abfuhreinrichtung 400 umfasst eine Einrichtung 402, die eine in radialer Richtung 238 nach außen, insbesondere spiralförmig, von der Außenwand 206 am abfuhrseitigen Ende 204 des Behälters 200 wegführende Sammeleinrichtung 426 aufweist. Die Sammeleinrichtung 426, welche als Teil eines Abfuhrrings ausgebildet ist, ist mit einer außerhalb des Behälters 200 angeordneten Aufnahmeeinrichtung fest verbunden, ist also ortsfest installiert.

Die Sammeleinrichtung 426 weist eine entgegen der bestimmungsgemäßen Drehrichtung 236 des Behälters 200 zum Behälter 200 hin ausgerichtete Eintrittsöffnung 430 auf, welche zum Abführen des aufgeheizten Wärmeträgermediums 210 dient. Am abfuhrseitigen Ende 204 des Behälters 200 kann ein auf einem Umfang der Außenwand 206 umlaufender, nicht dargestellter, Abfuhrring 408 angeordnet sein, in welchen die Sammeleinrichtung 426 mit ihrer Eintrittsöffnung 430 mündet. Das Ende der Eintrittsöffnung 429 liegt etwa in dem Bereich, in dem die Sammeleinrichtung 426 von der Wand 206 des Behälters 200 weg geführt ist.

Der Austrittsbereich 428, in dem die Partikel des Wärmeträgermediums 210 den Behälter verlassen, liegt im vorderen Bereich der Abfuhreinrichtung 400, beginnend bei der Eintrittsöffnung 430.

Bei dieser Ausführungsform einer Abfuhreinrichtung 400 wird der eigentlich nur lokal erfolgende Partikelaustritt genutzt, um die Partikel dort lokal abzuführen. Hierbei wird die natürliche Partikelflugbahn in dem rotierenden Behälter 200 nachvollzogen, um die Partikel aus dem Behälter 200 abzuführen. Dadurch kann die Kollisionsgeschwindigkeit von Partikeln zur Eintrittsöffnung 430 eines Abführrohres als Sammeleinrichtung 426 reduziert werden. Auf diese Weise kann die Erosion von Partikeln und Sammeleinrichtung 426 reduziert und mögliche Staubbildung verringert werden. Je geringer der Partikelverlust an dieser Stelle ist, desto weniger Partikel müssen dem System mit der Zeit wieder zugeführt werden.

Eine reduziert ausgeführte ringförmige Sammeleinrichtung 426 für die Partikel kann weiterhin umlaufend eingesetzt werden, um sonstigen Partikelaustrag, beispielsweise bei Änderung des Betriebsmodus oder bei Auftreten von Wind, durchzuführen.

### Bezugszeichen

- 100: solarthermisches Kraftwerk
- 102: Heliostatenfeld
- 104: Heliostat
- 106: Spiegelfläche
- 108: Solarstrahlung
- 110: Solarstrahlungsempfängervorrichtung
- 112: Solarstrahlung
- 114: Turmreceiver
- 116: Turm
- 118: Boden
- 120: erster Kreislauf
- 122: Wärmeübertrager
- 124: Hochtemperaturzweig
- 126: Niedertemperaturzweig
- 128: Ausgang
- 130: Eingang
- 132: Ausgang
- 134: Eingang
- 136: zweiter Kreislauf
- 138: Wärmespeicher
- 140: Wärmespeicher
- 142: Turbine
- 144: elektrischer Generator
- 146: Hochtemperaturzweig
- 148: Ausgang
- 150: Niedertemperaturzweig
- 152: Kondensator
- 154: Eingang
- 156: Pumpe
- 200: Behälter
- 202: erstes Ende
- 204: zweites Ende
- 206: Außenwand
- 208: Innenraum
- 210: Wärmeträgermedium
- 212: Wärmeträgermedium-Film
- 214: Längsachse
- 216: Drehachse
- 218: Innenwand
- 220: Isolation
- 222: Winkel
- 224: Innendurchmesser Behälter
- 226: Lagerung
- 228: Leitstruktur
- 230: Fördervorrichtung
- 232: oberer Bereich
- 234: reibungsfördernde Einrichtung
- 236: Drehrichtung
- 238: radiale Richtung
- 300: Zufuhreinrichtung
- 302: Vorderwand
- 304: Zuführungsöffnung
- 308: Rückwand
- 310: Leitelement
- 312: Höhe
- 314: Durchmesser Rückwand
- 316: Konuswinkel
- 318: Kegel
- 320: Kegelspitze
- 322: Verteilungseinrichtung
- 324: Strömung Wärmeträgermedium
- 325: Abhebepunkt
- 326: Bescheinbare Fläche
- 327: Abhebepunkt
- 328: Abstand
- 330: Montagekranz
- 400: Abfuhreinrichtung
- 402: Einrichtung
- 406: axiale Dichtung
- 408: Abfuhrring
- 409: Kanal
- 410: Leitelement
- 412: Rohr
- 414: Rohröffnung
- 416: Aperturöffnung
- 418: Platte
- 420: Abdeckung
- 422: Verschraubung
- 424: Isolierung
- 426: Sammeleinrichtung
- 428: Austrittsbereich
- 429: Ende Eintrittsöffnung
- 430: Eintrittsöffnung
- 432: Ausbuchtung
- 434: Abführungsöffnung
- 436: Ringstruktur
- 438: Seite
- 440: Absatz
- 442: Seite

## Patentansprüche

1. Solarstrahlungsempfängervorrichtung (110) zum Aufheizen eines Wärmeträgermediums (210) in einem solarthermischen Kraftwerk (100), umfassend
- einen Behälter (200) mit zwei sich gegenüberliegenden Enden (202, 204), welcher eine Außenwand (206) und einen von der Außenwand (206) umgebenen Innenraum (208) umfasst;
- eine Zufuhreinrichtung (300) zum Zuführen des Wärmeträgermediums (210) zu dem Innenraum (208) des Behälters (200), wobei die Zufuhreinrichtung (300) an einem der Enden (202, 204) des Behälters (200) angeordnet ist;
- eine Abfuhreinrichtung (400) zum Ableiten des Wärmeträgermediums (210) aus dem Behälter (200), wobei die Abfuhreinrichtung (400) am gleichen oder gegenüberliegenden Ende (202, 204) des Behälters (200) angeordnet ist; sowie
- eine Aperturöffnung (416) für den Eintritt von Sonnenstrahlung an einem der Enden (202, 204);
wobei der Behälter (200) eine Längsachse (214) aufweist, welche parallel oder in einem spitzen Winkel kleiner 90° zur Schwerkraftrichtung (g) orientiert ist, wobei der Behälter (200) in einer bestimmungsgemäßen Drehrichtung (236) mittels einer Drehantriebsvorrichtung der Solarstrahlungsempfängervorrichtung (110) derart um eine Drehachse (216) drehbar ist, dass das Wärmeträgermedium (210) unter Ausbildung eines Wärmeträgermedium-Films (212) an einer Innenwand (218) des Behälters (200) entlangführbar ist,
wobei die Innenwand (218) des Behälters (200) eine reibungsfördernde Einrichtung (234) aufweist,
wobei die Zufuhreinrichtung (300) eine Vorderwand (302) mit einer Zuführungsöffnung (304) und eine zum Innenraum (208) des Behälters (200) gerichtete Rückwand (308) aufweist,
wobei zwischen Vorderwand (302) und Rückwand (308) wenigstens ein sich wenigstens in radialer Richtung (238) erstreckendes Leitelement (310) angeordnet ist, **dadurch gekennzeichnet, dass** das Leitelement entlang seiner Erstreckung zwischen Zuführungsöffnung (304) und Außenwand (206) in einer Richtung entgegen der bestimmungsgemäßen Drehrichtung (236) gekrümmt ausgebildet ist.

2. Solarstrahlungsempfängervorrichtung nach Anspruch 1, **dadurch gekennzeichnet, dass** das Wärmeträgermedium (210) fließfähig oder rieselfähig ist, insbesondere dass das Wärmeträgermedium (210) durch Partikel gebildet ist.

3. Solarstrahlungsempfängervorrichtung nach Anspruch 1 oder 2, **dadurch gekennzeichnet, dass** die Drehachse (216) parallel oder in einem spitzen Winkel (222) kleiner 90°, vorzugsweise kleiner oder gleich 80° zur Schwerkraftrichtung (g) liegt, insbesondere dass die Drehachse (216) koaxial zur Längsachse (214) des Behälters (200) ist.

4. Solarstrahlungsempfängervorrichtung nach einem der vorhergehenden Ansprüche, **dadurch gekennzeichnet, dass** das wenigstens eine Leitelement (310) auf der Rückwand (308) angeordnet sind, insbesondere wobei eine Höhe (312) des wenigstens einen Leitelements (310) wenigstens teilweise und/oder abschnittsweise einem Abstand (328) zwischen Vorderwand (302) und Rückwand (308) entspricht.

5. Solarstrahlungsempfängervorrichtung nach einem der vorhergehenden Ansprüche, **dadurch gekennzeichnet, dass** das wenigstens eine Leitelement (310) sich spiralförmig von der Zuführungsöffnung (304) in radialer Richtung (238) nach außen verlaufend erstreckt.

6. Solarstrahlungsempfängervorrichtung nach Anspruch 5, **dadurch gekennzeichnet, dass** an einem Außenrand der Rückwand (308) eine Verteilungseinrichtung (322) angeordnet ist, welche zur Vergleichmäßigung einer räumlichen Verteilung des Wärmeträgermediums (210) ausgebildet ist.

7. Solarstrahlungsempfängervorrichtung nach einem der vorhergehenden Ansprüche, **dadurch gekennzeichnet, dass** ein Durchmesser (314) der Rückwand (308) der Zufuhreinrichtung (300) kleiner als ein Innendurchmesser (224) des Behälters (200) ist, insbesondere dass der Durchmesser (314) der Rückwand (308) höchstens 95%, bevorzugt höchstens 60%, des Innendurchmessers (224) des Behälters (200) beträgt.

8. Solarstrahlungsempfängervorrichtung nach einem der vorhergehenden Ansprüche, **dadurch gekennzeichnet, dass** die Vorderwand (302) und die Rückwand (308) der Zufuhreinrichtung (300) konusförmig ausgebildet sind, insbesondere dass ein Konuswinkel (316) zwischen 30° und 90°, bevorzugt zwischen 45° und 80° liegt, insbesondere dass die Zuführungsöffnung (304) in einer Spitze des Konus angeordnet ist.

9. Solarstrahlungsempfängervorrichtung nach einem der Ansprüche 1 bis 7, **dadurch gekennzeichnet, dass** wenigstens die Rückwand (308) der Zufuhreinrichtung (300) als ebene Fläche ausgebildet ist, welche schräg, bevorzugt senkrecht, zur Längsachse (214) ausgerichtet ist, wobei in der Längsachse (214) ein mit einer Kegelspitze (320) zur Zuführungsöffnung (304) gerichteter Kegel (318) zur Verteilung des Wärmeträgermediums (210) angeordnet ist.

10. Solarstrahlungsempfängervorrichtung nach einem der vorhergehenden Ansprüche, **dadurch gekennzeichnet, dass** die Innenwand (218) des Behälters (200) verteilt angeordnete Leitstrukturen (228), insbesondere schaufelartige Leitstrukturen (228) aufweist, welche zum Fördern des Wärmeträgermediums (210) bei rotierendem Behälter (200) in Richtung des zufuhrseitigen oder abfuhrseitigen Endes (202, 204) ausgebildet sind.

11. Solarstrahlungsempfängervorrichtung nach einem der Ansprüche 1 bis 9, **dadurch gekennzeichnet, dass** im Innenraum (208) des Behälters (200) wenigstens eine parallel oder leicht geneigt, insbesondere kleiner 10°, bevorzugt kleiner 5° geneigt zur Längsachse (214) und benachbart zur Außenwand (206) verlaufende Fördervorrichtung (230), insbesondere ein Rohr, angeordnet ist, welche über seine Länge verteilt angeordnete Leitstrukturen (228), insbesondere schaufelartige Leitstrukturen (228), aufweist, welche zum Fördern des Wärmeträgermediums (210) bei rotierendem Behälter (200) in Richtung des ersten Endes (202) oder des zweiten Endes (204) ausgebildet sind, wobei die Fördervorrichtung (230) mit einer außerhalb des Behälters (200) angeordneten Aufnahmeeinrichtung fest verbunden ist.

12. Solarstrahlungsempfängervorrichtung nach Anspruch 11, **dadurch gekennzeichnet, dass** die Fördervorrichtung (230) zum Weiterleiten des am ersten Ende (202) des Behälters (200) über die Zufuhreinrichtung (300) zugeführten Wärmeträgermediums (210) zum zweiten Ende (204) ausgebildet ist.

13. Solarstrahlungsempfängervorrichtung nach Anspruch 11, **dadurch gekennzeichnet, dass** die Fördervorrichtung (230) zum Weiterleiten des aufgeheizten Wärmeträgermediums (210) vom zweiten Ende (204) zum ersten Ende (202) ausgebildet ist.

14. Solarstrahlungsempfängervorrichtung nach einem der Ansprüche 11 bis 13, **dadurch gekennzeichnet, dass** die Fördervorrichtung (230) in bestimmungsgemäßem Gebrauchszustand bezüglich einer Schwerkraftrichtung (g) in einem oberen Bereich (232) des Innenraums (208) angeordnet ist.

15. Solarstrahlungsempfängervorrichtung nach einem der vorhergehenden Ansprüche, **dadurch gekennzeichnet, dass** die reibungsfördernde Einrichtung (234) an der Innenwand (218) des Behälters (200) mittels eines additiven Fertigungsverfahrens gefertigt und mit der Außenwand (206) verbunden ist, insbesondere dass die reibungsfördernde Einrichtung (234) an der Innenwand (218) des Behälters (200) gitterförmig ausgebildet ist.

## Claims

1. Solar-radiation receiver apparatus (110) for heating a heat-transfer medium (210) in a solar thermal power plant (100), comprising
- a container (200) with two oppositely situated ends (202, 204), which comprises an outer wall (206) and an interior space (208) surrounded by the outer wall (206);
- a feeding device (300) for feeding the heat-transfer medium (210) to the interior space (208) of the container (200), wherein the feeding device (300) is arranged on one of the ends (202, 204) of the container (200);
- a discharging device (400) for removing the heat-transfer medium (210) from the container (200), wherein the removing device (400) is arranged on the same or the oppositely situated end (202, 204) of the container (200); and
- an aperture opening (416) for admitting solar radiation at one of the ends (202, 204);
wherein the container (200) has a longitudinal axis (214) which is oriented parallel or at an acute angle less than 90° to the direction of gravitational force (g), wherein the container (200) is rotatable about an axis of rotation (216) in an intended direction of rotation (236) by means of a rotary drive apparatus of the solar-radiation receiver apparatus (110) in such a way that the heat-transfer medium (210 is able to be guided along an inner wall (218) of the container (200) while forming a heat-transfer-medium film (212),
wherein the inner wall (218) of the container (200) has a friction-promoting device (234),
wherein the feeding device (300) has a front wall (302), which has a feed opening (304), and a rear wall (308), which is directed towards the interior space (208) of the container (200),
wherein at least one guiding element (310) extending at least in a radial direction (238) is arranged between front wall (302) and rear wall (308),
**characterized in that**, along its extent between feed opening (304) and outer wall (206), the guiding element is formed as curved in a direction counter to the intended direction of rotation (236).

2. Solar-radiation receiver apparatus according to Claim 1, **characterized in that** the heat-transfer medium (210) is flowable or pourable, in particular **in that** the heat-transfer medium (210) is formed by particles.

3. Solar-radiation receiver apparatus according to Claim 1 or 2, **characterized in that** the axis of rotation (216) is parallel or at an acute angle (222) less than 90°, preferably less than or equal to 80°, to the direction of gravitational force (g), in particular **in that** the axis of rotation (216) is coaxial with the longitudinal axis (214) of the container (200).

4. Solar-radiation receiver apparatus according to one of the preceding claims, **characterized in that** the at least one guiding element (310) is arranged on the rear wall (308), in particular wherein a height (312) of the at least one guiding element (310) at least partially and/or at least sectionally corresponds to a distance (328) between front wall (302) and rear wall (308).

5. Solar-radiation receiver apparatus according to one of the preceding claims, **characterized in that** the at least one guiding element (310) extends spirally from the feed opening (304) so as to run outwards in the radial direction (238).

6. Solar-radiation receiver apparatus according to Claim 5, **characterized in that**, on an outer periphery of the rear wall (308), there is arranged a distribution device (322) which is formed so as to even out a spatial distribution of the heat-transfer medium (210).

7. Solar-radiation receiver apparatus according to one of the preceding claims, **characterized in that** a diameter (314) of the rear wall (308) of the feeding device (300) is smaller than an inner diameter (224) of the container (200), in particular **in that** the diameter (314) of the rear wall (308) is at most 95%, preferably at most 60%, of the inner diameter (224) of the container (200).

8. Solar-radiation receiver apparatus according to one of the preceding claims, **characterized in that** the front wall (302) and the rear wall (308) of the feeding device (300) are of conical form, in particular **in that** a cone angle (316) lies between 30° and 90°, preferably between 45° and 80°, in particular **in that** the feed opening (304) is arranged at a top end of the cone.

9. Solar-radiation receiver apparatus according to one of Claims 1 to 7, **characterized in that** at least the rear wall (308) of the feeding device (300) is formed as a planar surface which is oriented obliquely, preferably perpendicularly, to the longitudinal axis (214), wherein a cone (218) which has a cone top end (320) directed towards the feed opening (304) and serves for distributing the heat-transfer medium (210) is arranged along the longitudinal axis (214).

10. Solar-radiation receiver apparatus according to one of the preceding claims, **characterized in that** the inner wall (218) of the container (200) has guiding structures (228), in particular blade-like guiding structures (228), which are arranged in a distributed manner and which are formed so as to convey the heat-transfer medium (210) in the direction of the feeding-side or discharging-side end (202, 204) while the container (200) is rotating.

11. Solar-radiation receiver apparatus according to one of Claims 1 to 9, **characterized in that**, in the interior space (208) of the container (200), there is arranged at least one conveying apparatus (230), in particular a tube, which runs parallel or at a slight angle, in particular at an angle less than 10°, preferably less than 5°, to the longitudinal axis (214) and adjacent to the outer wall (206), and has guiding structures (228), in particular blade-like guiding structures (228), arranged in a manner distributed over its length, said guiding structures being formed so as to convey the heat-transfer medium (210) in the direction of the first end (202) or the second end (204) while the container (200) is rotating, wherein the conveying apparatus (230) is connected fixedly to a receiving device which is arranged outside the container (200).

12. Solar-radiation receiver apparatus according to Claim 11, **characterized in that** the conveying apparatus (230) is formed so as to pass on the heat-transfer medium (210) fed via the feeding device (300) at the first end (202) of the container (200) to the second end (204).

13. Solar-radiation receiver apparatus according to Claim 11, **characterized in that** the conveying apparatus (230) is formed so as to pass on the heated heat-transfer medium (210) from the second end (204) to the first end (202) .

14. Solar-radiation receiver apparatus according to one of Claims 11 to 13, **characterized in that**, in an intended state of use, the conveying apparatus (230) is arranged in an upper region (232) of the interior space (208) in relation to a direction of gravitational force (g).

15. Solar-radiation receiver apparatus according to one of the preceding claims, **characterized in that** the friction-promoting device (234) on the inner wall (218) of the container (200) is manufactured by means of an additive manufacturing process and is connected to the outer wall (206), in particular **in that** the friction-promoting device (234) on the inner wall (218) of the container (200) is formed in a grid-like manner.

## Revendications

1. Dispositif de réception de rayonnement solaire (110) destiné à chauffer un milieu caloporteur (210) dans une centrale solaire thermique (100), ledit dispositif comprenant
- un récipient (200) qui est pourvu de deux extrémités opposées (202, 204) et qui comprend une paroi extérieure (206) et un espace intérieur (208) entouré par la paroi extérieure (206) ;
- un module d'alimentation (300) destiné à amener le milieu caloporteur (210) à l'espace intérieur (208) du récipient (200), le dispositif d'alimentation (300) étant disposé à l'une des extrémités (202, 204) du récipient (200) ;
- un module d'évacuation (400) destiné à évacuer le milieu caloporteur (210) du récipient (200), le module d'évacuation (400) étant disposé à la même extrémité ou à l'extrémité opposée (202, 204) du récipient (200) ; ainsi que
- une ouverture (416) destinée à l'entrée du rayonnement solaire à l'une des extrémités (202, 204) ;
le récipient (200) ayant un axe longitudinal (214) qui est orienté parallèlement au sens de gravité (g) ou suivant un angle aigu inférieur à 90° par rapport à celui-ci, le récipient (200) pouvant tourner sur un axe de rotation (216) dans un sens de rotation prévu (236) au moyen d'un dispositif d'entraînement en rotation du dispositif de réception de rayonnement solaire (110) de manière à ce que le milieu caloporteur (210) puisse être guidé le long d'une paroi intérieure (218) du récipient (200) en formant un film de milieu caloporteur (212),
la paroi intérieure (218) du récipient (200) comportant un module de promotion de friction (234),
le module d'alimentation (300) comportant une paroi avant (302) pourvue d'une ouverture d'alimentation (304) et une paroi arrière (308) dirigée vers l'espace intérieur (208) du récipient (200),
au moins un élément de guidage (310) qui s'étend au moins dans une direction radiale (238) étant disposé entre la paroi avant (302) et la paroi arrière (308), **caractérisé en ce que** l'élément de guidage est incurvé le long de son extension entre l'ouverture d'alimentation (304) et la paroi extérieure (206) dans un sens opposé au sens de rotation prévu (236).

2. Dispositif de réception de rayonnement solaire selon la revendication 1, **caractérisé en ce que** le milieu caloporteur (210) est fluide ou coulant, en particulier **en ce que** le milieu caloporteur (210) est formé par des particules.

3. Dispositif de réception de rayonnement solaire selon la revendication 1 ou 2, **caractérisé en ce que** l'axe de rotation (216) est placé parallèlement au sens de gravité (g) ou suivant un angle aigu (222) inférieur ou égal à 90°, de préférence inférieur ou égal à 80°, par rapport à celui-ci, notamment **en ce que** l'axe de rotation (216) est coaxial à l'axe longitudinal (214) du récipient (200) .

4. Dispositif de réception de rayonnement solaire selon l'une des revendications précédentes, **caractérisé en ce que** l'au moins un élément de guidage (310) est disposé sur la paroi arrière (308), notamment une hauteur (312) de l'au moins un élément de guidage (310) correspondant au moins partiellement et/ou par portions à une distance (328) entre la paroi avant (302) et la paroi arrière (308) .

5. Dispositif de réception de rayonnement solaire selon l'une des revendications précédentes, **caractérisé en ce que** l'au moins un élément de guidage (310) s'étend en spirale dans une direction radiale (238) vers l'extérieur depuis l'ouverture d'alimentation (304).

6. Dispositif de réception de rayonnement solaire selon la revendication 5, **caractérisé en ce qu'**un module de distribution (322), qui est conçu pour égaliser une distribution spatiale du milieu caloporteur (210), est disposé sur un bord extérieur de la paroi arrière (308).

7. Dispositif de réception de rayonnement solaire selon l'une des revendications précédentes, **caractérisé en ce qu'**un diamètre (314) de la paroi arrière (308) du module d'alimentation (300) est inférieur à un diamètre intérieur (224) du récipient (200), en particulier **en ce que** le diamètre (314) de la paroi arrière (308) représente au plus 95 %, de préférence au plus 60 %, du diamètre intérieur (224) du récipient (200).

8. Dispositif de réception de rayonnement solaire selon l'une des revendications précédentes, **caractérisé en ce que** la paroi avant (302) et la paroi arrière (308) du dispositif d'alimentation (300) sont coniques, notamment **en ce qu'**un angle de cône (316) est compris entre 30° et 90°, de préférence entre 45° et 80°, en particulier **en ce que** l'ouverture d'alimentation (304) est disposée au sommet du cône.

9. Dispositif de réception de rayonnement solaire selon l'une des revendications 1 à 7, **caractérisé en ce qu'**au moins la paroi arrière (308) du module d'alimentation (300) est conçue comme une surface plane qui est orientée obliquement, de préférence perpendiculairement, à l'axe longitudinal (214), un cône (318) dont le sommet de cône (320) est dirigé vers l'ouverture d'alimentation (304) et qui est destiné à distribuer le milieu caloporteur (210) étant disposé dans l'axe longitudinal (214).

10. Dispositif de réception de rayonnement solaire selon l'une des revendications précédentes, **caractérisé en ce que** la paroi intérieure (218) du récipient (200) comporte des structures de guidage (228) disposées de manière répartie, en particulier des structures de guidage (228) de type pales qui sont conçues pour transporter le milieu caloporteur (210), lorsque le récipient (200) est en rotation, en direction de l'extrémité côté alimentation ou côté évacuation (202, 204).

11. Dispositif de réception de rayonnement solaire selon l'une des revendications 1 à 9, **caractérisé en ce qu'**au moins un dispositif de transport (230), en particulier un tube, est disposé dans l'espace intérieur (208) du récipient (200) en s'étendant parallèlement ou de manière légèrement inclinée, notamment inclinée à moins de 10°, de préférence inclinée à moins de 5°, par rapport à l'axe longitudinal (214) et de manière adjacente à la paroi extérieure (206), lequel dispositif de transport comporte des structures de guidage (228), en particulier des structures de guidage (228) de type pales, qui sont disposées de manière répartie sur sa longueur et qui sont conçues pour transporter le milieu caloporteur (210), lorsque le récipient (200) est en rotation, en direction de la première extrémité (202) ou de la deuxième extrémité (204), le dispositif de transport (230) étant relié de manière fixe à un module de réception disposé à l'extérieur du récipient (200).

12. Dispositif de réception de rayonnement solaire selon la revendication 11, **caractérisé en ce que** le dispositif de transport (230) est conçu pour acheminer à la deuxième extrémité (204) le milieu caloporteur (210) qui a été amené par le module d'alimentation 300) à la première extrémité (202) du récipient (200).

13. Dispositif de réception de rayonnement solaire selon la revendication 11, **caractérisé en ce que** le dispositif de transport (230) est conçu pour acheminer le milieu caloporteur chauffé (210) de la deuxième extrémité (204) à la première extrémité (202).

14. Dispositif de réception de rayonnement solaire selon l'une des revendications 11 à 13, **caractérisé en ce que** le dispositif de transport (230) est disposé dans l'état d'utilisation prévu par rapport au sens de gravité (g) dans une zone supérieure (232) de l'espace intérieur (208) .

15. Dispositif de réception de rayonnement solaire selon l'une des revendications précédentes, **caractérisé en ce que** le module de promotion de friction (234) est fabriqué sur la paroi intérieure (218) du récipient (200) au moyen d'un procédé de fabrication additive et est relié à la paroi extérieure (206), en particulier **en ce que** le module de promotion de friction (234) est conçu sous forme de grille sur la paroi intérieure (218) du récipient (200).
